# EUROPEAN PATENT SPECIFICATION

(11) **EP 1 369 765 B1**
(45) Date of publication and mention of the grant of the patent: **15.11.2006**
(21) Application number: 03251681.7
(22) Date of filing: 18.03.2003
(51) Int. Cl.: G06F 21/22

(54) **Information processing apparatus, program loading method, recording medium, program updating method and circuit device**
Vorrichtung zur Verarbeitung von Informationen, Methode zum Laden eines Programmes, Speicher Medium, Methode zum updaten eines Programmes und elektronische Schaltung
Appareil de traitement de l'information, méthode de chargement, support d'enregistrement, méthode de mise à jour et circuit

(30) Priority: 20.05.2002 JP 2002145264
(43) Date of publication of application: 10.12.2003
(60) Divisional application: 06076507.0
(73) Proprietor: SONY CORPORATION, Tokyo 141 (JP)
(72) Inventor: Kitani, Satoshi C/o Intellectual Prop. Dept., Shinagawa-ku, Tokyo 141 (JP); Moriichi, Munetoshi C/o Intellectual Prop. Dept., Shinagawa-ku, Tokyo 141 (JP)
(74) Representative: Turner, James Arthur

(56) References cited:
- EP-A- 1 191 421
- US-A- 5 844 986
- US-A- 5 956 408
- US-A- 6 049 671

## Description

This invention relates to program updating for an information processing apparatus. More particularly, it relates to an information processing apparatus, program loading method, a recording medium, a program updating method and a circuit device.

The DVD (Digital Versatile Disc) is an optical disc having a recording capacity capable of recording one-motion-picture-equivalent video and audio data, and is used as a ROM (DVD-ROM; DVD-Read Only Memory).

Since the DVD-ROM records digital data free of deterioration, several protective functions are provided to prevent unauthorized duplication or unauthorized use of digital data recorded thereon.

As typical of the protective functions in reproducing the DVD-ROM is reproduction limitation by RC (regional code). The regional code is a number accorded to each of six global regions. For example, the regional code of US is "1", while that of Japan is "2".

The regional code is accorded to each of the DVD-ROM and to a DVD-ROM drive or a DVD reproducing application, such that a given DVD-ROM cannot be reproduced except in case of coincidence of the respective regional codes. For example, since the regional code "2" is accorded to the DVD-ROM drive manufactured in Japan, such drive is unable to reproduce the DVD-ROM produced in US with the regional code "1". This is a protective function provided for the purpose of protecting a producer of contents, such as motion pictures.

On the other hand, the DVD-ROM has a protective function or system of prohibiting digital duplication. This is termed CSS (content scrambling system) and prohibits digital duplication by arranging so that, while a file itself can be duplicated on e.g., a hard disc, the file represents encrypted data and hence MPEG (Moving Picture Experts Group) data cannot be decrypted.

The DVD-ROM also has a protective function of prohibiting the duplication of output analog data, and a protective function of managing the generation of duplication of digital data among digital equipment by way of imposing limitations on duplication.

This protective function is implemented by a program, termed firmware, written in a preset ROM in the DVD-ROM drive. The firmware is a sort of software, directly controlling the hardware, written in a ROM and built in the hardware.

With the firmware, executing the protective function, written in a preset ROM of the DVD-ROM drive, it becomes possible to eliminate illicitly prepared DVD-Video.

It is in general difficult to rewrite or modify such firmware. However, in a DVD-ROM drive connected to e.g., a PC (Personal Computer) so as to be driven under its control, the necessity for updating the firmware arises as a consequence of the updating of the OS (Operating System) of the PC (Personal Computer). Thus, in such DVD-ROM, the firmware is configured for being updated.

Moreover, if the PC is not sufficiently compatible in connection performance with the DVD-ROM drive, such connection incompatibility may be improved by updating the firmware of the DVD-ROM drive.

For enabling the updating of the firmware, a so-called flash memory, such as EEPROM (Electrically Erasable Read-Only Memory), which is a programmable ROM which permits of electrical data erasure, issued as a ROM for storing the firmware.

However, when this firmware is to be updated, the firmware can readily be downloaded from a home page provided by a DVD-ROM drive producer, over the Internet, the user is able to obtain the firmware extremely readily.

There is also a problem that the firmware acquired may be tampered by a user and stored in a preset flash memory of the DVD-ROM drive to invalidate the aforementioned protective function of the DVD-ROM drive.

The program tampering is a problem innate to an apparatus in need of program transfer in general inclusive of the firmware. An apparatus exploiting the tampered program suffers from a problem that it performs an operation different from the expected operation and is apt to fall into disorder in the worst of cases.

US 5844986 discloses a cryptographic co-processor that prevents unauthorized modifications of BIOS program code, based on a public/private key protocol.

EP 1191421 discloses tamper resistant software and a method of using a plurality of testing stations along a distribution channel to detect whether an unauthorised modification has been made.

US 5956408 discloses a software update mechanism using public key cryptography for encryption and digital signatures.

Various respective aspects and features of the invention are defined-in the appended claims. Features from the dependent claims may be combined with features of the independent claims as appropriate and not merely as explicitly set out in the claims.

In embodiments of the invention, program tampering may be prohibited by preventing program leakage during program updating or loading.

Embodiments of the present invention can provide an information processing apparatus, a program loading method, a recording medium, a program updating method and a circuit device in which tampering of a program that may occur as a result of leakage to outside of program data at the time of program updating or loading to prohibit illicit use of the program data.

In one aspect, the present invention provides an information processing apparatus comprising: encrypted program data receiving means for receiving encrypted program data having encrypted firmware, encrypted first verification data and an encrypted verification program using a preset encryption key; storage means for storing said program; decrypting means for decrypting said program data into firmware, first verification data and verification program respectively, using a preset decryption key; program readout means for reading out said program stored in said storage means; controlling means for controlling a preset operation of the information processing apparatus based on said program read out by said readout means; and wherein in use said controlling means calculates a second verification data by said verification program from said firmware before executing said firmware, and compares said calculated second verification data to said first verification data ; said readout means reading out said program responsive to coincidence of the first verification data and the second verification data compared to each other by said controlling means.

In another aspect, the present invention provides a program loading method for loading a program for controlling a preset operation of an information processing apparatus, to said information processing apparatus, said method comprising: an encrypted program data receiving step of receiving encrypted program data having encrypted firmware, encrypted first verification data and an encrypted verification program, encrypted with a preset encryption key; a decrypting step of decrypting said program data into firmware, first verification data and verification program respectively, using a preset decryption key; a storage step of storing said program in storage means; calculating a second verification data by said verification program from said firmware; comparing said calculated second verification data with said first verification data, and; reading out said program responsive to coincidence of the first verification data and the second verification data when compared to each other.

In still another aspect, the present invention provides a recording medium having recorded thereon a preset program for loading a preset program, configured for controlling a preset operation of an information processing apparatus, to the information processing apparatus, in which the program comprises an encrypted program data receiving step of receiving encrypted program data obtained on encrypting the preset program using a preset encryption key, a decrypting step of decrypting the encrypted program data, received by the encrypted program data receiving step, to the preset program, using a preset decoding key, and a storage step of storing the preset program, decrypted from the encrypted program data by the decrypting step.

In still another aspect, the present invention provides an information processing apparatus having a controlling unit including storage means having stored therein a first program and controlling means for reading out the first program stored in the storage means and for controlling the preset operation of the information processing apparatus based on the first program read out, in which the information processing apparatus comprises encrypted program data receiving means for receiving encrypted program data which is a second program encrypted using a preset encryption key, decoding means for decoding the encrypted program data, received by the encrypted program data receiving means, using a preset decoding key, and program transmitting means for transmitting the second program, decrypted by the decrypting means from the encrypted program data, to the controlling unit. The controlling unit includes program receiving means for receiving the second program transmitted by the transmitting means, and program writing means for writing the second program received by the program receiving means in the storage means.

In still another aspect, the present invention provides a program updating method for an information processing apparatus having a controlling unit including storage means having stored therein a first program and controlling means for reading out the first program stored in the storage means and for controlling a preset operation of the information processing apparatus based on the first program as read out, in which the method comprises an encrypted program data receiving step of receiving encrypted program data, which is a second program encrypted using a preset encryption key, responsive to a program update request requesting the updating of the first program, a decrypting step of decrypting the encrypted program data, received by the encrypted program data receiving step, to the second program, using a preset decrypting key, a program transmitting step of transmitting the second program, decrypted from the encrypted program data by the decrypting step, a program receiving step of receiving the second program transmitted to the controlling unit by the program transmitting step, and a program writing step of writing the second program, received by the program receiving step, in the storage means.

In still another aspect, the present invention provides an information processing apparatus having a data processing unit for performing preset data processing, in which the data processing unit includes encrypted program data receiving means for receiving encrypted program data which is a preset program encrypted using a preset encryption key, decoding means for decoding the encrypted program data, received by the encrypted program data receiving means, to the preset program, using a preset decrypting key, storage means for storing the preset program, decrypted from the encrypted program data by the decrypting means, program readout means for reading out the preset program stored in the storage means, first controlling means for controlling a preset data processing operation in the data processing unit, based on the preset program read out by the program readout means, and takeout limitingmeans for limiting the takeout from an external device of the preset program decrypted by the decrypting means and the preset program stored in the storage means.

In still another aspect, the present invention provides a program loading method in a data processing unit provided in an information processing apparatus, the data processing unit executing preset data processing, in which the method comprises an encrypted program data receiving step of receiving encrypted program data which is a preset program encrypted using a preset encryption key, the preset program being a program for executing the preset data processing in the data processing unit, a decrypting step of decrypting the encrypted program data, received in the encrypted program data receiving step, into the preset program, using a preset decryption key, a takeout limiting step of limiting takeout of the decrypted preset program from an external device, and a storage step of storing the preset program, decrypted in the decrypting step from the encrypted program data, in storage means.

In still another aspect, the present invention provides a recording medium having recorded thereon a program for loading a preset program in a data processing unit provided in an information processing apparatus, the data processing unit executing preset data processing, in which the program stored in the recording medium includes an encrypted program data receiving step of receiving encrypted program data which is a preset program encrypted using a preset encryption key, the preset program being a program for executing a preset data processing operation in the data processing unit, a decrypting step of decrypting the encrypted program data, received in the encrypted program data receiving step, into the preset program, using a preset decryption key, a takeout limiting step of limiting the takeout of the decrypted preset program from an external device, and a storage step of storing the preset program, decrypted in the decrypting step from the encrypted program data, in storage means.

In yet another aspect, the present invention provides a circuit device which is an integration of data processing means of an information processing apparatus adapted for performing preset data processing, comprising, in an integrated form, encrypted program data receiving means for receiving encrypted program data which is a preset program encrypted with a preset encryption key, decrypting means for decrypting the encrypted program data, received by the encrypted program data receiving means, into the preset program, using a preset decryption key, storage means for storing the preset program decrypted from the encrypted program data by the decrypting means, program readout means for reading out the preset program stored in the storage means, and takeout limiting means for limiting the takeout of the preset program decrypted by the decrypting means and the preset program stored in the storage means.

In the information processing apparatus according to the present invention, described above, in which the encrypted program data is decrypted by decrypting means, using a preset decryption key, the decrypted program is stored in storage means, the so stored program is read out and the preset operation of the information processing apparatus is controlled by controlling means, based on the read-out program, to prevent leakage of the program data to outside during program loading, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

With the program loading method, according to the present invention, in which the encrypted program data is decrypted by a decryption step to a program, using a preset decryption key, and the so decrypted program is stored in storage means, leakage of program data to outside at the time of program loading may be prohibited to enable prevention of illicit acts employing program data leaked to outside at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

In the recording medium according to the present invention, in which a program comprising decrypting the encrypted program data to a program, using a preset decryption key, and storing the decrypted program in storage means, is recorded thereon, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

In the information processing apparatus according to the present invention, in which the encrypted program data obtained on encrypting a second program using a preset encryption key is decrypted to a second program, in decrypting means in the controlling unit, using a preset encryption key, responsive to a program update request, the decrypted second program is written by program writing means in storage means to update a first program, and in which the takeout from the external device of the second program decrypted by the decrypting means and the second program written in the storage means is limited by takeout limiting means, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

The information processing apparatus of the present invention can be manufactured inexpensively because it is unnecessary to newly construct an architecture of the controlling unit.

Moreover, the information processing apparatus of the present invention effects decryption processing in the controlling unit only at the time of program updating, the processing operation during the normal operation is not liable to be lowered.

In the program updating method according to the present invention, in which the encrypted program data, which is a second program encrypted using a preset encryption key, is decrypted to the second program, in a decrypting step, responsive to a program update request, using a preset decryption key, the decoded second program is written in the program write step in storage means to update a first program, and in which the takeout from the external device of the second program decrypted by the decrypting step and the second program written in the storage means is limited by the takeout limiting step, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

Moreover, in the program updating method of the present invention, in which encryption/decryption is carried out in the controlling unit only at the time of updating the first program, the processing operation in the controlling unit during the normal operation is not liable to be lowered.

In the recording medium of the present invention, having recorded thereon a program comprising decrypting encrypted program data, which is a second program encrypted using a preset encryption key, to the second program, in a decrypting step, using a preset decryption key, responsive to a program update request, the decrypted second program is written in the program write step in the storage means to update the first program and in which the takeout from the external device of the second program decrypted by he decrypting step and the second program written un the storage means is limited by the takeout limiting step, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

Moreover, in the program recorded on the recording medium of the present invention, in which encryption/decryption is carried out in the controlling unit only at the time of updating the first program, the processing operation in the controlling unit during the normal operation is not liable to be lowered.

In the circuit device according to the present invention, in which the encrypted program data encrypted using a preset encryption key is decrypted to a second program, in a decrypting step, using a preset decryption key, responsive to a program update request, in the integrated decrypting means, the decrypted second program is written in the program write means in the storage means to update the first program and in which the takeout from the external device of the second program decrypted by he decrypting step and the second program written on the storage means is limited by the takeout limiting step, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

Moreover, in the circuit device of the present invention, in which encryption/decryption is carried out in the controlling unit only at the time of updating the first program, the processing operation in the controlling unit during the normal operation is not liable to be lowered.

In the information processing apparatus according to the present invention, in which the encrypted program data encrypted using a preset encryption key is decrypted to a second program, in decrypting means in a data processing unit, using a preset decryption key, responsive to a program update request, and transmitted to the controlling unit, and the second program decrypted in the program write means in the controlling unit is written in the storage means in the controlling unit, to update the first program, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

In the program updating method according to the present invention, in which encrypted program data, corresponding to a second program encrypted using the preset encryption key, is decrypted in the decrypting step, using a preset decryption key, to the second program, responsive to a program update request, and transmitted to the controlling unit, and in which the second program, decrypted in a program write step, is written in storage means in storage means in the controlling unit to update the first program, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

In the recording medium according to the present invention, there is recorded thereon a program in which the encrypted program data, corresponding to a second program encrypted using the preset encryption key is decrypted in the decrypting step, using a preset decryption key, to the second program, responsive to a program update request, and transmitted to the controlling unit, and in which the second program, decrypted in a program write step, is written in storage means in storage means in the controlling unit to update the first program, it is possible to prohibit illicit acts employing the program data that has leaked at the time of program loading.

For example, it is possible to prohibit illicit acts such as invalidation of reproduction limitation by the regional codes (RC) that may arise on leakage of firmware data due to updating of the firmware of the DVD-ROM drive, unauthorized duplication of DVD-ROM or invalidation of reproduction limitation of DVD-ROM.

In the information processing apparatus according to the present invention, in which encrypted program data corresponding to a preset program encrypted using a preset encryption key data is decrypted by decrypting means in the data processing unit to a preset program, the so decrypted program is stored in storage means in the data processing unit and in which takeout of the preset program decrypted by the decrypting means and the preset program stored in storage means from the external device is limited by takeout limiting means to prohibit leakage of the program data to outside during program loading, thus enabling prevention of an illicit act employing program data leaked at the time of program loading.

In the program loading method according to the present invention, in which encrypted program data corresponding to a preset program encrypted using a preset encryption key data is decrypted by a decrypting step to a preset program, the so decrypted program is stored in storage means in the data processing unit and in which takeout of the preset program decrypted by the decrypting step and the preset program stored in storage means from the external device is limited by the takeout limiting step to prohibit leakage of the program data to outside during program loading, thus enabling prevention of an illicit act employing program data leaked ai the time of program loading.

In the recording medium according to the present invention, there is recorded a program in which encrypted program data corresponding to a preset program encrypted using a preset encryption key data is decrypted by a decrypting step to a preset program, the so decrypted program is stored in storage means in the data processing unit and in which takeout of the preset program decrypted by the decrypting step and the preset program stored in storage means from the external device is limited by the takeout limiting step to prohibit leakage of the program data to outside during program loading, thus enabling prevention of an illicit act employing program data leaked at the time of program loading. Thus, it is possible to prohibit illicit acts employing the program data that has leaked at the time of program loading.

In the circuit device according to the present invention, in which encrypted program data corresponding to a preset program encrypted using a preset encryption key data is decrypted by decrypting means to the preset program, the so decrypted program is stored in storage means and in which takeout of the preset program decrypted by the decrypting means and the preset program stored in storage means from the external device is limited by takeout limiting means, it is possible to prohibit leakage of the program data to outside during program loading, thus enabling prevention of an illicit act employing program data leaked at the time of program loading.

The invention will now be described by way of example with reference to the accompanying drawings, throughout which like parts are referred to by like references, and in which:
Fig.1 is a block diagram for illustrating the structure of a DVD-ROM device as a first embodiment of the present invention.
Fig.2 illustrates encoding.
Fig.3 is a flowchart showing the operation in case of updating the firmware in a DVD-ROM drive embodying the present invention.
Fig.4 is a first flowchart for illustrating the operation in updating the firmware by an update function in the DVD-ROM drive.
Fig.5 is a second flowchart for illustrating the operation in updating the firmware by an update function in the DVD-ROM drive.
Fig.6 is a flowchart for illustrating the operation of confirming whether or not the updating has met with success after the firmware update processing.
Fig.7 is a block diagram for illustrating an alternative configuration of the CPU of the DVD-ROM drive.
Fig.8 is a block diagram for illustrating the structure of a DVD-ROM drive as a second embodiment of the present invention.
Fig.9 illustrates the structure of a decrypting unit of the DVD-ROM drive.
Fig. 10 illustrates the structure of an encryption unit of the DVD-ROM drive.
Fig. 11 is a first flowchart for illustrating the firmware update operation by an update function in the DVD-ROM drive.
Fig.12 is a second flowchart for illustrating the firmware update operation by an update function in the DVD-ROM drive.
Fig. 13 is a flowchart for illustrating the operation of confirming whether or not, in the DVD-ROM drive, updating has met with success after the firmware update processing.
Fig.14 is a block diagram for illustrating the structure of a DVD-ROM drive as a third embodiment of the present invention.
Fig.15 illustrates the structure of a decrypting unit for the DVD-ROM drive.
Fig.16 is a flowchart for illustrating the operation in loading a microprogram in the DVD-ROM drive.
Fig.17 is a flowchart for illustrating the operation of generating an encryption program to which has been attached a verification program for prohibiting tampering.
Fig.18 is a flowchart for illustrating the operation of a DVD-ROM drive for executing the encryption program to which has been attached the verification program.
Fig.19 is a flowchart for illustrating the operation of the verification program.
Fig.20 shows a program body to which have been attached the verification program and verification data.
Fig.21 illustrates the hash function.
Fig.22 illustrates the manner of encryption of the program body to which have been attached the verification program and verification data.
Fig.23 illustrates the manner in which check sum data has been attached to the encrypted data.

Referring to the drawings, preferred embodiments of an information processing apparatus, a program loading method, a recording medium, a Program updating method and a circuit device according to the present invention will be explained in detail.

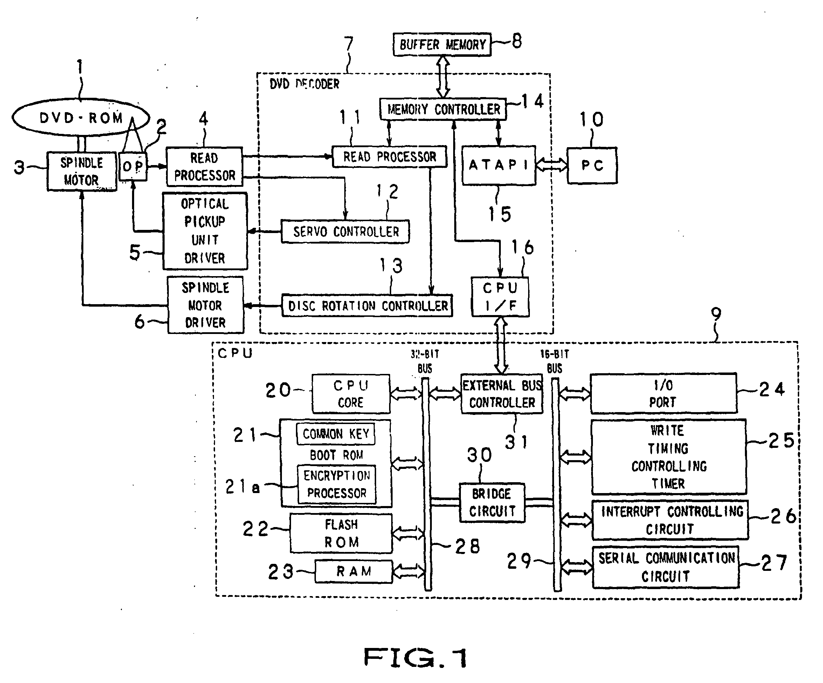

Fig.1 illustrates the structure of a DVD-ROM drive shown as a first embodiment of the present invention.

The DVD-ROM drive is configured for reproducing a DVD-ROM 1 loaded in position thereon. The DVD-ROM drive is connected to a personal computer (PC) 10, such that the various operations of the DVD-ROM 1 are controlled by the PC 10 connected thereto.

The DVD drive includes an optical pickup unit 2, a spindle motor 3, a read processor 4, an optical pickup unit driver 5, a spindle motor driver 6, a DVD decoder 7, a buffer memory 8 and a CPU 9, although these components are not specifically shown.

The optical pickup unit 2 includes a laser diode for radiating the laser light of a preset wavelength, an objective lens for radiating the laser light of a preset wavelength, radiated from the laser diode, so that the laser light will be condensed on a data recording surface of the DVD-ROM 1, a bi-axial actuator for actuating the objective lens loaded thereon for effecting focussing and tracking adjustments responsive to preset control signals, and a photodetector for receiving the light reflected back from the data recording surface of the DVD-ROM 1 for converting the light into electrical signals to detect the presence or absence of pits on the data recording surface. The electrical signals detected by the photodetector are generally termed RF (radio frequency signals).

The optical pickup unit 2 includes a sled motor for driving the optical pickup unit 2 along the radius of the DVD-ROM 1.

Moreover, if the DVD-ROM drive includes a mechanism for setting the DVD-ROM 1 on a disc tray for loading, not shown, a loading motor for actuating the disc tray may be provided on this optical pickup unit 2.

The spindle motor 3 is a motor for rotationally driving the DVD-ROM 1 loaded in position.

The read processor 4 generates, form the RF signals detected by the photodetector provided on the optical pickup unit 2 EFM+ (eight-to-fourteen bit modulation plus) signals for DVD readout, focussing error (FE) signals for tracking servo, and pull-in signals, to sent the so generated signals to a servo control unit 12.

The optical pickup unit driver 5 is a driver IC (integrated circuit) which is responsive to a preset control signal to actuate a biaxial actuator, sled motor and the loading motor, not shown, of the optical pickup unit 2.

The spindle motor driver 6 is a driver IC responsive to a preset control signal to actuate the aforementioned spindle motor 3.

The DVD decoder 7 includes a DVD signal processor 11, the servo control unit 12, a disc driving unit 13, a memory controller 14, an ATAPI (AT attachment with packet interface) 15 and a CPU I/F 16.

The DVD signal processor 11 includes an RS-PC decoder, an ID processing 8/16 conversion circuit and a wobble detector for giving a decision as to whether or not the medium is recordable.

The servo control unit 12 is responsive to e.g., the FE signals, TE signals or to pull-in signals, transmitted from the read processor 4, to generate control signals for driving-controlling the bi-axial actuator or the sled motor of the optical pickup unit 2 to send the so generated control signals to the optical pickup unit driver 5.

The disc driving unit 13 generates a control signal for controlling the rotation of the spindle motor 3, having loaded the DVD-ROM 1, and sends the generated control signal to the spindle motor driver 6.

The memory controller 14 controls the data write to and data readout from the buffer memory 8.

The ATAPI 15 is an interface for interconnecting and for exchanging data between the PC10 and the DVD-ROM drive.

The interface for connection to the PC10 may also be SCCI (Small Computer System Interface), USB (Universal Serial Bus) or IEEE (Institute for Electrical and Electronics Engineers) 1394, in place of this ATAPI 15.

The CPU I/F 16 is an interface for interconnecting the DVD decoder 7 and the CPU 9 for controlling the DVD decoder 7 from the CPU 9. The CPU I/F 16 reads out data stored in the buffer memory 8 or writing data therein.

The buffer memory 8 is a random-accessible memory, such as, for example, DRAM (Dynamic Random-Access Memory), and transiently holds the data sent out from the DVD signal processor 11 or from the CPU 9.

The CPU 9 is connected to the DVD decoder 7 over CPU I/F 16 to comprehensively control the functions of the DVD-ROM drive. The structure and the functions of the CPU 9 will be explained in detail subsequently.

The PC 10 is connected to the DVD-ROM drive through e.g., the ATAPI 15 of the DVD decoder 7 to control the operations of the DVD-ROM drive, such as reproduction, stop or data retrieval, by inputting a preset command. The user is able to utilize various data of the DVD-ROM 1 through PC 10.

The structure of the CPU 9 is now explained.

The CPU 9 includes a CPU core 20, a boot ROM 21, a flash ROM 22, a RAM 23, an input/output port 24, a write timing controlling timer 25, an interrupt controlling circuit 26, a serial communication circuit 27, a 32-bit bus 28, a 16-bit bus 29, a bridge circuit 30 and an external bus controller 31.

The CPU core 20 represents a core part of the CPU 9 and includes an arithmetic logic circuit, an adder or a register for executing arithmetic operations or comparative decisions.

The boot ROM 21 is a so-called flash memory, such as EEPROM (Electrically Erasable Programmable Read-Only Memory), which is a programmable ROM capable of electrical data erasure.

The boot ROM 21 has stored therein a boot program that is booted when updating the program stored in the flash ROM 22. In booting this boot program, a preset voltage is applied to a terminal provided for example on the CPU 9. When the preset voltage is applied to the terminal provided on the CPU 9, the boot program is read out beginning from the leading address to execute the boot program.

The boot ROM 21 also includes an encryption processing unit 21a, having stored therein, as a program, a common key used for deciphering the firmware transmitted encrypted, and a deciphering algorithm for decoding the firmware encrypted using this common key.

The flash ROM 22, similarly to the boot ROM 21, is a so-called flash memory, such as EEPROM, which is an electrically erasable programmable ROM.

The flash ROM 22 has stored therein a firmware, that is a firmware, which is a program for imposing reproduction limitations for the DVD-ROM drive. The firmware stored in the flash ROM 22 is a program for executing preset operations of the DVD-ROM drive, for example, the reproduction limitation for DVD-ROM 1 or limitations of digital copying.

An MRAM (Magnetic Random Access Memory), employing a TMR (Tunneling Magneto-Resistive) device, may also be used in place of the flash ROM 22. The MRAM is a memory for magnetically storing data and hence permits data rewriting. Thus, in updating the firmware, the operation of erasing data stored in the MRAM is unnecessary. That is, the pre-update erasure operation for the firmware is unnecessary.

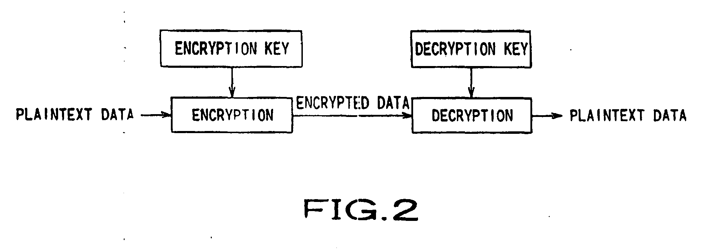

Referring to Fig.2, the common key is explained.

In Fig.2, in encrypting plaintext data, the data is converted to encrypted data, using a preset encryption key. In decrypting the encrypted data, it is converted to plaintext data, using a preset decryption key.

Stated differently, the encryption key is used for encrypting the plaintext data or information, while the decryption key is used for reverting the encrypted data or information to the original plaintext data or information.

The common key means a key used in common as an encryption key for encrypting data as described above and as a decryption key used in decrypting the encrypted data. Since the information of this common key is kept secret, without being opened, the common key is also termed a secret key.

Although the boot ROM 21 and the flash ROM 22 are indicated as being two different flash ROMs, these may be combined into a sole flash ROM, the storage area of which may then be split into a boot area and a program area.

The RAM 23 is e.g., an SRAM (Static Random Access Memory) not in need of refresh operations for maintaining the stored content and which may be accessed speedily. The RAM 23 represents an area in which to unfold data and an updating program when updating the firmware stored in the flash ROM 22.

In general, a flash memory is unable to execute for itself a program for updating the data stored therein. Thus, in updating the firmware, the update function is copied from the boot ROM 21 to the RAM 23, along with the firmware data transmitted from the buffer memory 8.

The input/output port 24 operates as a data input port to and as a data output port from the CPU 9.

The write timing controlling timer 25 controls the write timing when updating the firmware of the flash ROM 22.

The interrupt controlling circuit 26 exercises control to abort the processing currently going on responsive to generation of a preset interrupt to permit execution of the interrupt program.

The serial communication circuit 27 is an interface for transmission/reception of serial data.

The 32-bit bus 28 is a bus capable of transmitting/receiving 32-bit data at a time.

The 16-bit bus 29 is a bus capable of transmitting/receiving 16-bit data at a time.

The bridge circuit 30 interconnects the 32-bit bus 28 and the 16-bit bus 29.

The external bus controller 31 monitors data transmitted between the CPU 9 and the DVD decoder 7 as an external device and controls data input/output with respect to the DVD decoder 7. The external bus controller 31 also has a protecting function such that the RAM 23 and the program stored in the boot ROM 21 and in the flash ROM 22 cannot be referred to on the user level. This allows for imposing limitations on taking out the common key, encryption processing unit 21a and the decrypted firmware from the CPU 9.

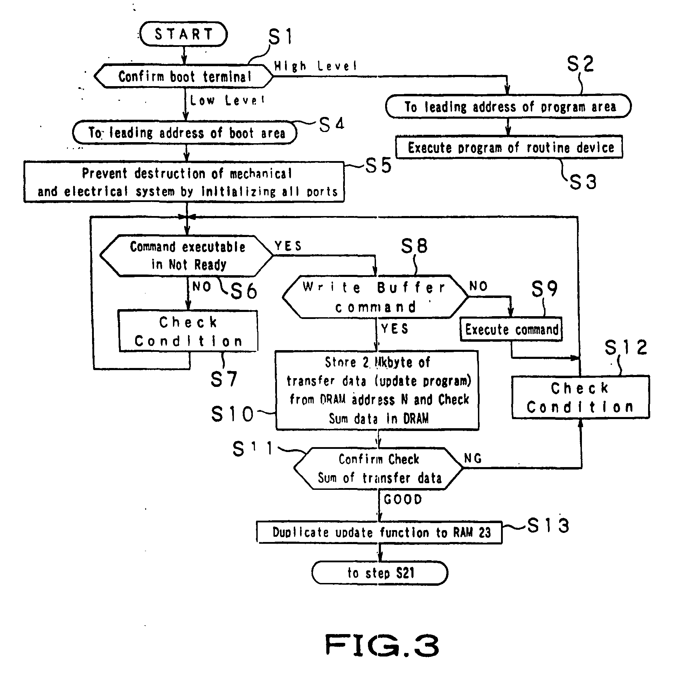

Referring to the flowchart of Fig.3, the operation of updating the firmware stored in the flash ROM 22 is now explained.

First, in a step S1, the CPU core 20 of the CPU 9 proceeds to a step S2 if the voltage applied to a boot terminal is high. If the voltage is low, the CPU core proceeds to a step S4.

The process from step S2 is a process for executing the program stored in the flash ROM 22, while the process from step S4 ff. is a process for booting the boot program stored in the boot ROM 21 to update the firmware.

In the step S2, the CPU core 20 accesses the program of the flash ROM 22, for example, the leading address of the program area in which the firmware is stored.

In a step S3, the CPU core 20 is responsive to the program stored in the program area of the accessed flash ROM 22 to execute the usual processing, such as reproduction or data retrieval, for the DVD-ROM 1.

In a step S4, the leading address of the boot area, in which the boot program of the boot ROM 21 is stored, is read into the CPU core 20, responsive to the low level voltage applied to the boot terminal, to boot the boot program.

In a step S5, the CPU core 20 initializes the totality of ports of the DVD-ROM drive. This prohibits the mechanical and electrical systems of the DVD-ROM drive from being destroyed.

In a step S6, the CPU core 20 verifies whether or not a command that can be executed in a Not Ready state has been input from the PC 10. The Not Ready state herein means a state in which the DVD-ROM 1 is not loaded in position on the DVD-ROM drive or the state in which the DVD-ROM 1 is not recognized by the CPU 9, while the command that can be executed in the Not Ready state means a command that can be executed even if the DVD-ROM 1 has not been recognized. For example, a command to read out preset data from the DVD-ROM 1 is such a command that cannot be executed in the Not Ready state.

If a command that can be executed in the Not Ready state is input, the CPU core proceeds to a step S8. If a command that cannot be executed in the Not Ready state is input, the CPU core proceeds to a step S7.

In the step S7, the CPU core 20 is responsive to the inputting of the command that cannot be executed in the Not Ready state to complete the command in a Check Condition Status to revert to step S6.

In a step S8, the CPU core 20 proceeds to a step S9 if a command different than a write buffer command instructing to update the program of the flash ROM 22 has been sent from the PC 10. If the Write buffer command is transmitted, the CPU core 20 proceeds to a step S10.

In a step S9, the CPU core 20 is responsive to the inputting of the command different than the Write buffer command to execute the input command.

After transmitting the Write buffer command to the DVD-ROM drive, the PC 10 transmits encrypted firmware data, obtained on encrypting, with a common key, the firmware to be updated as a binary file, to the DVD-ROM drive.

In a step S10, the CPU core 20 is responsive to receipt of the Write buffer command to procure an area of 2xM KB of the data storage area of the buffer memory 8, beginning from an address N, where M is a natural number, to cause the binary file transmitted from the PC 10 to be stored in the so procured data storage area.

On receipt of the binary file, the CPU core 20 sums the totality of the binary data to generate Check Sum data which is stored along with the binary file in the buffer memory 8. The Check Sum data, which is data for confirming that the program sent has been received without errors, may be obtained on summing the totality of the data together.

In a step S11, the CPU core 20 verifies the Check Sum data, stored in the step S10 in the buffer memory 8, to check to see if the firmware data transmitted has been correctly received. If the data has been received correctly, the CPU core 20 proceeds to a step S13 and, if otherwise, the CPU core 20 proceeds to a step S12.

In the step S12, the CPU core 20 informs the PC 10 of the fact that the binary data has not been transmitted correctly, as confirmed from the verified results of the Check Sum data of step S11, by completing the command by the Check Condition Status. The CPU core 20 then reverts to step S6.

In a step S13, the CPU core 20 copies the update function, used in updating the firmware to the RAM 23 from the boot ROM 21, in which the update function is presently stored.

The update function is copied to and unfolded in the RAM 23 to operate as an update program for updating the firmware to the flash ROM 22.

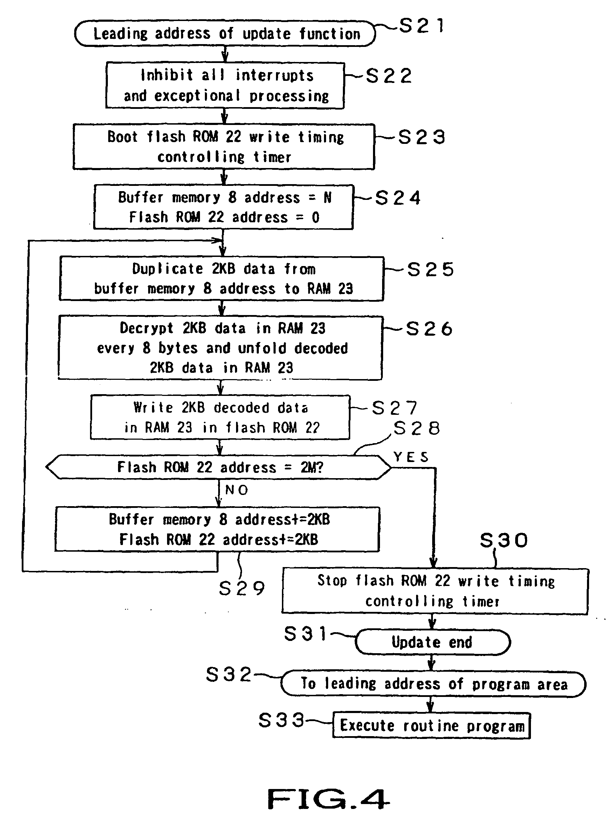

The processing operation by the update function is now explained, using the flowchart shown in Fig.4.

In a step S21, the CPU core 20 accesses the leading address of the update function stored in the RAM 23 to start to update the firmware by the update function to the flash ROM 22.

In a step S22, the CPU core 20 controls the interrupt controlling circuit 26 to inhibit execution of the interrupt program in its entirety as well as to inhibit execution of the exceptional processing.

The CPU core 20 is responsive to the receipt of the Write buffer command, input from the PC 10, to erase data stored in the firmware storage area of the flash ROM 22.

Meanwhile, if the aforementioned MRAM is used in place of the flash ROM 22, it becomes unnecessary to erase the firmware stored, because the MRAM permits data rewriting.

In a step S23, the CPU core 20 boots the write timing controlling timer 25 adapted for controlling the write timing in the flash ROM 22.

The data is subsequently written in the flash ROM 22 based on timing control by the write timing controlling timer 25.

In a step S24, the CPU core 20 accesses the address number N of the buffer memory 8, in which the binary file of the encrypted firmware data is stored, and the address number 0 of the flash ROM 22, in which to store the firmware.

In a step S25, the CPU core 20 reads out the 2 KB data from the address number N of the buffer memory 8 to copy the read-out data in the RAM 23.

In a step S26, the CPU core 20 reads out the 2 KB data, copied to the RAM 23, every 8 bytes, and decrypts the data, using the common key in the boot ROM 21 and the deciphering algorithm stored in the encryption processing unit 21a. The CPU core 20 causes the decrypted 2 KB data, that is deciphered firmware data, to be again stored and unfolded in the RAM 23.

In a step S27, the CPU core 20 causes the 2 KB firmware data, stored in the RAM 23, to be read out from the RAM 23 and written in the flash ROM 22, beginning from the address number 0.

If, in a step S28, the last address number of the firmware data, stored in the flash ROM 22, is 2xM, M being a natural number, the CPU core 20 proceeds to a step S30. If otherwise, the CPU core 20 proceeds to a step S29.

In a step S29, the CPU core 20 accesses an address which is the address number of the buffer memory 8 incremented by 2 KB and an address which is the address number of the flash ROM 22 incremented by 2KB. When ths step is finished, the CPU core reverts to the step S25.

In the step S30, the CPU core 20 stops the write timing controlling timer 25 which controls the write timing to the flash ROM 22.

In a step S31, the updating of the firmware to the flash ROM 22 is finished as a result of the decision in the step S28 that the last address number of the firmware data stored in the flash ROM 22 is 2xM, M being a natural number, and also as a result of the write timing controlling timer 25 being halted in the step S30.

In a step S32, the CPU core 20 is responsive to the updating of the firmware being finished in the step S31 to access the leading address of the program area of the flash ROM 22.

In a step S33, the CPU core 20 is responsive to the program stored in the accessed program area of the flash ROM 22, that is to the as-updated firmware, to execute the usual processing, such as reproduction or data retrieval.

In the DVD-ROM drive, according to the present invention, in updating the firmware stored in the flash ROM 22, the encrypted firmware data, encrypted from the PC 10, is decrypted, using the common key, by the encryption processing unit in the boot ROM 21 in the CPU 9, and is written in the flash ROM 22, thereby preventing firmware data from leaking to outside.

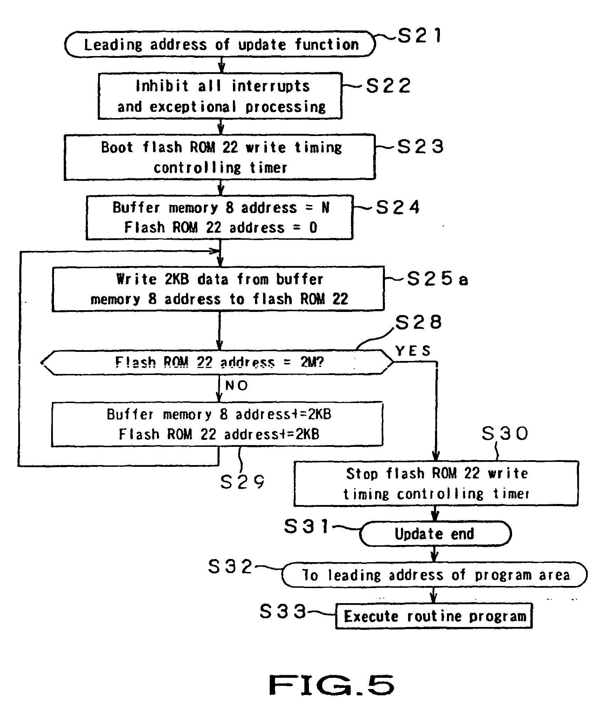

In the flowchart shown in Fig.4, there is stated a technique of receiving the encrypted firmware data from the PC 10 and of decrypting the received encrypted firmware data for writing in the flash ROM 22. If the non-encrypted data are transmitted from the PC 10, the process from the step S25 to the step S27 of Fig.4 may be changed to the process of step S25a of directly writing from the buffer memory 8 to the flash ROM 22, as shown in Fig.5.

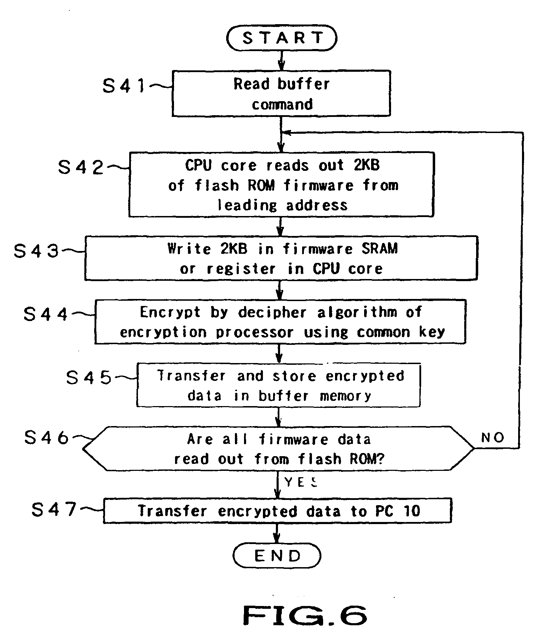

Referring to the flowchart of Fig.6, the processing operation of verifying the result of updating the firmware to the flash ROM 22 by the PC 10 is now explained.

In a step S41, the PC 10 transmits a read buffer command, requesting transfer of the firmware stored in the flash ROM 22, to the DVD-ROM drive.

In a step S42, the CPU core 20 is responsive to receipt of the read buffer command, transmitted from the PC 10, to read out 2KB data of the firmware stored in the flash ROM 22, beginning from the leading address of the flash ROM 22.

In a step S43, the CPU core 20 causes the read-out 2 KB-equivalent data to be recorded and stored in a register of the RAM 23 or in the CPU core 20.

In a step S44, the CPU core 20 controls the encryption processing unit 21a of the boot ROM 21 to read out and encrypt the 2KB equivalent firmware data, stored in the RAM 23 or in the CPU core 20, using the common key, in accordance with the deciphering algorithm stored in the encryption processing unit 21a.

In a step S45, the CPU core 20 transfers the encrypted 2KB equivalent firmware data to the buffer memory 8 for storage therein.

In a step S46, the CPU core 20 detects whether or not the totality of the firmware data stored in the flash ROM 22 has been read out. If the entire firmware data has been read out, the CPU core 20 proceeds to step S47 and, if the entire firmware data has not been read out, the CPU core reverts to the step S42.

In a step S47, if the totality of the firmware data stored in the flash ROM 22 has been read out and stored encrypted in the buffer memory 8, the CPU core 20 transfers the encrypted firmware data, stored in the buffer memory 8, to the PC 10.

The transferred encrypted firmware data is compared, in the encrypted state, in the PC unit, to the original data, to check for coincidence.

In this manner, the PC 10 is able to verify whether or not the firmware has been reliably updated in the flash ROM 22 of the DVD-ROM drive. Since the firmware is encrypted in the CPU 9 and transmitted in this state to the PC 10, and hence the plaintext firmware cannot be acquired partway on the transmission route, it is possible to prevent the firmware from being analyzed or tampered.

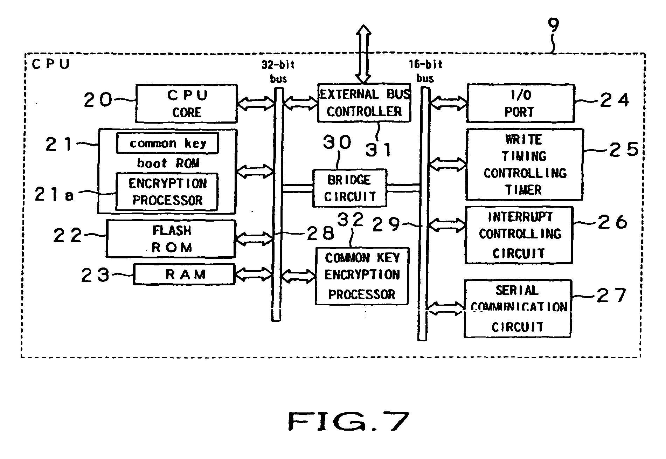

In the CPU 9 of the DVD-ROM drive, configured as shown in Fig.1, the encrypted firmware data is decrypted by a program of the deciphering algorithm, stored in the boot ROM 21. Alternatively, the encryption processing unit, as a program, may be formed into hardware as a common key encryption processing unit 32, by way of re-constructing the CPU 9, as shown in Fig.7.

The CPU 9, having the common key encryption processing unit 32, performs high-speed encryption processing, so that the firmware can be updated more speedily. The update processing is here not explained because it is similar to the operation explained in connection with the flowchart of Figs.3 and 4.

In the above explanation, the encrypted firmware, transmitted from the CPU 10, is deciphered by the CPU 9 itself and uploaded to the flash ROM 22 provided in the CPU 9. This CPU 9 includes the boot ROM 21 as an encryption processing unit for deciphering the encrypted firmware.

In this manner, the encryption processing unit for deciphering the encrypted firmware, such as the boot ROM 21 provided to the CPU 9, may be loaded in the DVD decoder 7 shown in Fig.1. It may be said to be more realistic to customize the DVD decoder 7 such as to load the encryption processing unit thereon.

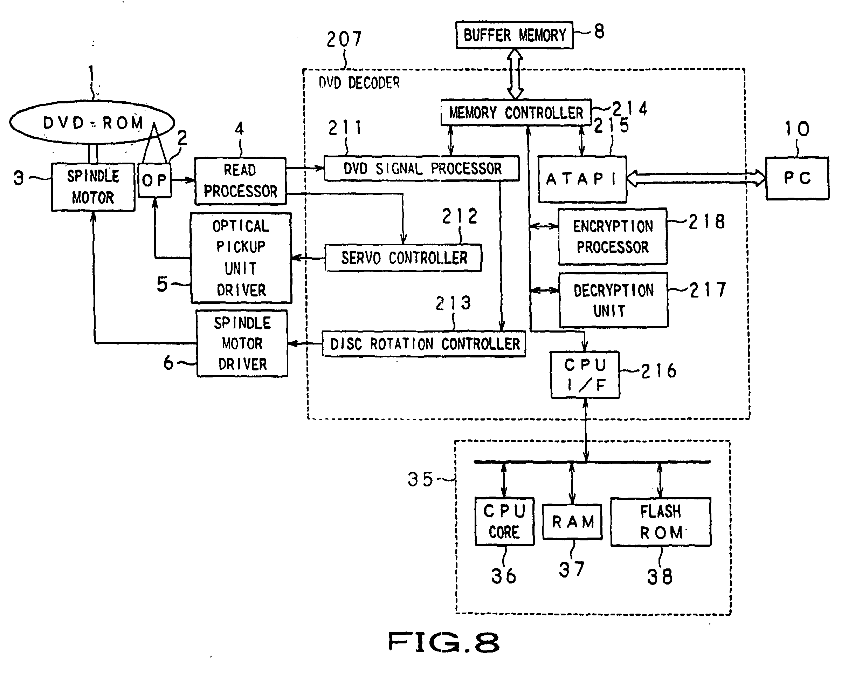

The DVD-ROM drive, comprised of a DVD decoder and a decrypting unit 17 for deciphering the encrypted firmware, shown as a second embodiment in Fig.8, is hereinafter explained.

A DVD decoder 207 in the DVD-ROM drive, shown in Fig.8, is comprised of the DVD decoder 7, shown in Fig.1, to which are annexed a decrypting unit 217 for deciphering the encrypted firmware input from the PC 10, and an encryption unit 218 for encrypting the plaintext firmware stored in a flash ROM 38 in verifying the plaintext firmware by the PC 10. The DVD-ROM drive is otherwise the same as the DVD-ROM drive shown in Fig.1.

The decoder 217 and the encryption unit 218 are able to analyze a stream cipher, as one of the common key cipher techniques, for encrypting the plaintext using, as an encryption key, the random number termed a key stream (pseudo-random number). The encryption and decryption by a stream cipher system is sequentially carried out in terms of a small data block as a unit, for example, every bit or every several bits, such as every byte.

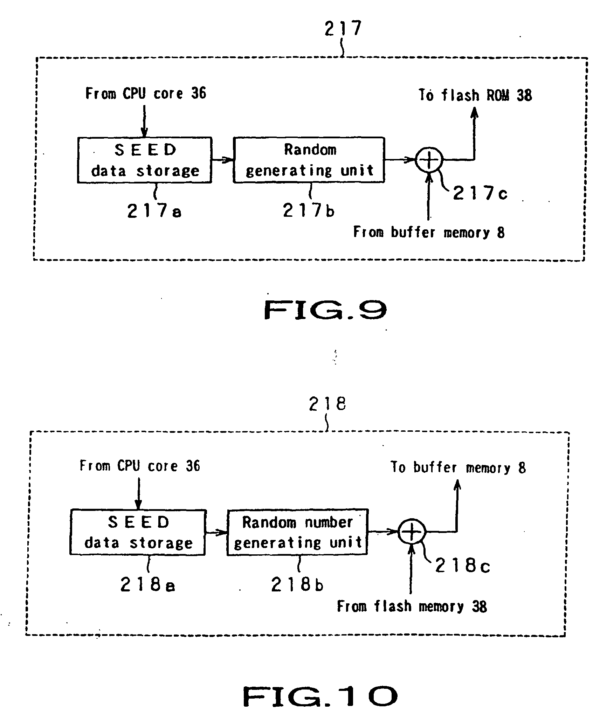

If adapted for coping with the stream cipher, the decoder 217 includes a SEED data storage unit 217a, a random number generating unit 217b and an exclusive-OR unit 217c, as shown in Fig.9.

The SEED data storage unit 217a has stored therein SEED data, which is an initial input value to the random number generating unit 217b and which corresponds to the common key, and outputs the stored SEED data to the random number generating unit 217b, responsive to a command from a CPU core 36.

The SEED data, stored SEED data storage unit 217a, may be of a pre-stored fixed value, or can be optionally set from the CPU core 36.

The random number generating unit 217b is responsive to the SEED data input from the SEED data storage unit 217a to generate random numbers, in accordance with a preset algorithm, to output the so generated random numbers to the exclusive-OR unit 217c.

The exclusive-OR unit 217c takes an Ex-Or of the encrypted firmware data read out from the buffer memory 8 in terms of a preset data length as a unit, and the random numbers output from the random number generating unit 217b, by way of decrypting the firmware data, and outputs the decrypted plaintext firmware data to the flash ROM 38 in a CPU 35.

If adapted for coping with the stream cipher, the encryption unit 218 includes a SEED data storage unit 218a, a random number generating unit 218b and an exclusive-OR unit 218c, as shown in Fig.10.

The SEED data storage unit 218a has stored therein SEED data, which is an initial input value to the random number generating unit 218b and which corresponds to the common key, and outputs the stored SEED data to the random number generating unit 218b, responsive to a command from the CPU core 36.

The SEED data, stored in the SEED data storage unit 218a, may be of a pre-stored fixed value, or can be optionally set from the CPU core 36.

Meanwhile, the SEED data, input from the SEED data storage unit 218a to the random number generating unit 218b, is the same as the SEED data input to the random number generating unit 217b of the decoder 217 from the SEED data storage unit 217a.

The random number generating unit 218b is responsive to the SEED data input from the SEED data storage unit 218a to generate random numbers, in accordance with a preset algorithm, to output the so generated random numbers to the exclusive-OR unit 218c.

The algorithm used in the random number generating unit 218b is the same as the algorithm used for generating the random numbers in the random number generating unit 217b of the decoder 217.

The exclusive-OR unit 218c takes an Ex-Or of the plaintext firmware data, read out from the flash RUM 38 in terms of a preset data length as a unit, and the random numbers output from the random number generating unit 218b, by way of encrypting the firmware data, and outputs the encrypted plaintext firmware data to the buffer memory 8.

The CPU 35 includes a CPU core 36, a RAM 37 and a flash ROM 38. The CPU 35 is connected through a CPU I/F 216 to the DVD decoder 207.

The CPU core 36, similarly to the CPU core 20, shown in Fig.1, represents a core part of the CPU 35 and includes an arithmetic logic circuit, an adder or a register for executing arithmetic operations or comparative decisions.
The RAM 37, similarly to the RAM 23, shown in Fig.1, is e.g., an SRAM (Static Random Access Memory) not in need of refresh operations for maintaining the stored content and which may be accessed speedily. The RAM 37 represents an area in which to unfold data and an updating program when updating the firmware stored in the flash ROM 38.

The flash ROM 38 is a so-called flash memory, such as EEPROM, which is an electrically erasable programmable ROM. The flash ROM 38, similarly to the flash ROM 22 shown in Fig.1, has stored therein a firmware, which is a program for imposing reproduction limitations for the DVD-ROM drive.

The plaintext firmware data, decrypted by the decrypting unit 217 of the DVD decoder 207, is output to the flash ROM 38 in the CPU 35 through a CPU/IF 216.

The flash ROM 38, similarly to the flash ROM 22 provided in the CPU 9 of the DVD-ROM drive shown in Fig.1, may be an MRAM, employing a TMR device.

In the DVD-ROM drive, shown in Fig.8, the plaintext firmware data, decoded by the DVD decoder 207, is transmitted in the plaintext state to the CPU 35. Consequently, the risk is high that, during transfer, the wiring be acted upon to underlook the plaintext firmware data.

Thus, it becomes necessary to provide the wiring between the CPU 35 and the DVD decoder 207, where flows the plaintext firmware data, as an inner layer of a multi-layered substrate, or to design a semiconductor package as a ball grid array with no pin-like projection.

Meanwhile, the functional units different than the CPU 35 and the DVD decoder 207 of the DVD-ROM drive are the same as those provided to the DVD-ROM drive shown in Fig.1 and hence are not explained specifically.

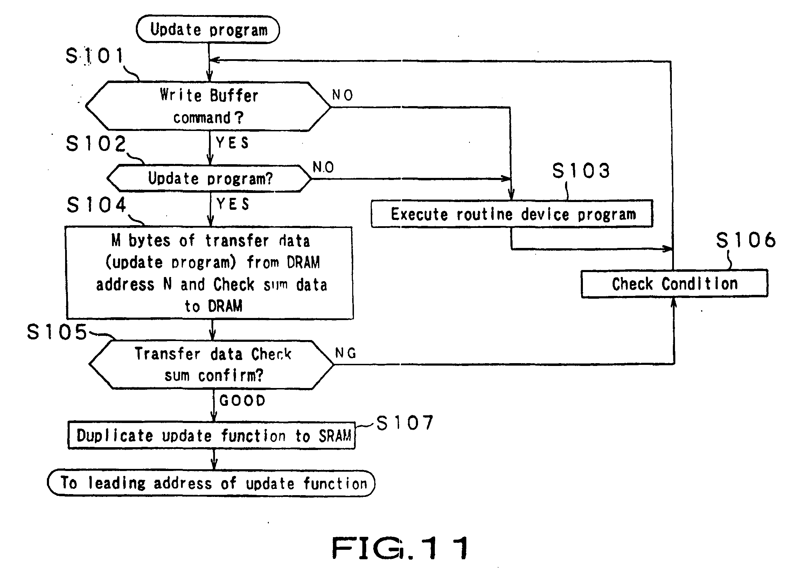

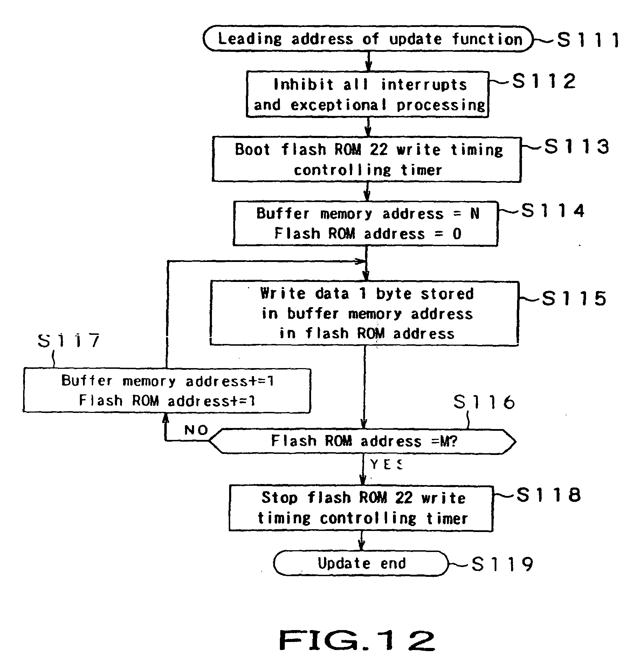

Using the flowcharts of Figs. 11 and 12, the operation in updating the firmware stored in the flash ROM 38 is now explained. First, using the flowchart shown in Fig.11, the operation until the update function is read into the RAM 37 is explained.

In a step S101, the CPU core 36 checks to see if a command transmitted from the PC 10 and received is a Write buffer command. If the command is not the Write buffer command, the CPU core proceeds to a step S102 and, if the command is the Write buffer command, the CPU core 36 proceeds to a step S103.

In the step S102, the CPU core 36 checks to see if a parameter commanding the updating of the firmware stored in the flash ROM 38 has been appended to the Write buffer command transmitted from the PC 10. If the parameter is not appended to the command, the CPU core 36 proceeds to the step S103 and, if the parameter is appended to the command, the CPU core 36 proceeds to a step S104.

In the step S103, the CPU core 36 is responsive to the command from the PC10 not being the Write buffer command to execute the transmitted command. The CPU core 36 is also responsive to the command from the PC10 being the Write buffer command but the firmware update instructing parameter not being appended to the command to exercise control to write data other than the firmware transmitted from the PC 10 in the buffer memory 8. When the process of step S103 comes to a close, the CPU core 36 reverts to a step S101.

After transmitting the Write buffer command to the DVD-ROM drive, the PC 10 sends encrypted firmware data for updating, corresponding to the firmware for updating, encrypted in accordance with the stream encryption system, as a binary file to the DVD-ROM drive.

In the step S104, the CPU core 36 is responsive to receipt of the Write buffer command to procure an M-byte equivalent area, beginning from an address N, of a data storage area of the buffer memory 8, M being a natural number, to store the binary file transmitted from the PC 10 in the so procured data storage area.

In a step S105, the CPU core 36 confirms the Check Sum of the transferred binary file. To the transmitted binary file is appended the Check Sum data. The CPU core 36 compares the appended Check Sum data to the sum value of the binary data of the binary file transmitted and, if the two are coincident, it is assumed that the binary file has correctly been transmitted. The CPU core 36 then proceeds to a step S107. If the two are not coincident, it is assumed that the transmission of the binary file has met with failure, and the CPU core 36 proceeds to a step S106.

In the step S106, the CPU core 36 informs the PC 10 of the fact that the binary file has not correctly been transmitted, as may be evidenced from the verified results of the Check Sum data, by terminating the command with the Check Condition Status, to then revert to the step S101.

In the step S107, the CPU core 36 duplicates the update function of updating the firmware of the flash ROM 38 stored in the flash ROM 38 to the RAM 37 to enable the program of the CPU core 36 to be executed on the RAM 37.

The CPU core 36 then erases data stored in the firmware storage area of the flash ROM 38, that is the pre-update firmware. Meanwhile, this erasure operation is omitted if the flash ROM 38 is the rewritable MRAM.

Using the flowchart, shown in Fig.12, the processing operation by the update function is now explained.

In a step S111, the CPU core 36 accesses the leading address of the update function stored in the RAM 37 to start to update the firmware by the update function to the flash ROM 38 of the firmware.

In a step S112, the CPU core 36 controls an interrupt controlling circuit, not shown, to inhibit execution of the interrupt program in its entirety as well as to inhibit execution of the exceptional processing.

In a step S113, the CPU core 36 boots a write timing controlling timer, not shown, which controls the write timing to the flash ROM 38. Subsequently, the writing of data in the flash ROM 38 is carried out under timing control by the write timing controlling timer.

In a step S114, the CPU core 36 accesses the address number N in the buffer memory 8 where the encrypted firmware data is stored and the address number 0 of the flash ROM 38 in which to store the firmware.

In a step S115, the CPU core 36 reads out data in terms of a data volume convenient for decoding as a unit, e.g., every byte, beginning from the address number N of the buffer memory 8, and decrypts the data in the decrypting unit 17 to the plaintext. The CPU core 36 causes the decrypted plaintext firmware data to be stored in the register in the CPU core 36 or in the RAM 37.

The CPU core 36 reads out the firmware data stored in the register in the CPU core 36 or in the RAM 37 to write the read-out data in the flash ROM 38 beginning from the address number 0 of the flash ROM 38.

In a step S116, the CPU core 36 checks to see if the firmware data has been written in its entirety in the flash ROM 38. If he address number is not M, the CPU core 36 proceeds to s step S117 and, when the address number is M, the CPU core 36 proceeds to s step S118.

In the step S117, the CPU core 36 accesses an address which is the address number of the buffer memory 8 incremented by 1 byte and an address which is the address number of the flash ROM 38 incremented by 1 byte. When ths step is finished, the CPU core 20 reverts to the step S115 to read out the encrypted firmware data from the accessed address number of the buffer memory 8 as well as to write the decrypted plaintext firmware data in the accessed address number in the flash ROM 38.

In a step S118, the CPU core 36 stops the write timing controlling timer which controls the write timing to the flash ROM 38.

In a step S119, the updating of the firmware to the flash ROM 38 is finished as a result of the decision in the step S116 that the last address number of the firmware data stored in the flash ROM 38 is M, M being a natural number, and also as a result of the write timing controlling timer 25 being halted in the step S118. This completes the firmware updating to the flash ROM 38.

Thus, in the DVD-ROM drive of the present invention, shown in Fig.8, when updating the firmware stored in the flash ROM 38, the encrypted firmware data, encrypted in accordance with the stream ciphering system in the PC 10, is decrypted in the decoder 217 in the DVD decoder 207 and written in the flash ROM 38 in the CPU 35.

In the data exchange between the DVD decoder 207 and the CPU 35, plaintext firmware data is transmitted. In this case, leakage of the firmware data may be prohibited by using mounting level artifices, such as not allowing the exposure of the semiconductor package terminal portions, or proper wiring.

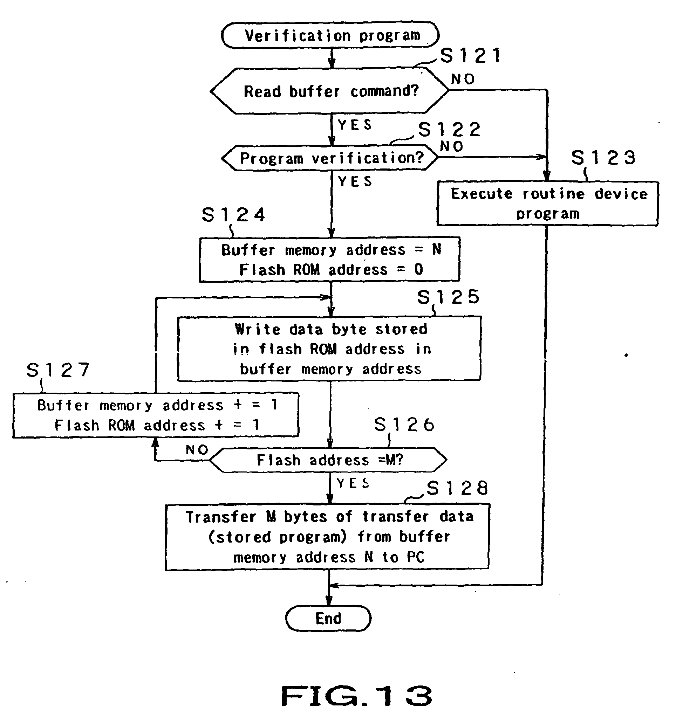

Using the flowchart shown in Fig. 13, the processing in verifying the results of updating the firmware to the flash ROM 38 by the PC 10 is now explained.

In a step S121, it is checked whether or not the command transmitted from the PC 10 and received is the Read buffer command. If the command is not the Read buffer command, the CPU core proceeds to a step S123 and, if the command is the Read buffer command, the CPU core 36 proceeds to a step S122.

In the step S122, the CPU core 36 detects whether or not a parameter instructing readout of the firmware stored in the flash ROM 38 is appended to the Read buffer command transmitted from the PC 10. If the parameter is not appended, the CPU core proceeds to a step S123 and, if the parameter is appended, the CPU core 36 proceeds to a step S124.

In the step S123, the CPU core 36 is responsive to the command from the C 10 not being the Read buffer command to execute the transmitted command. The CPU core 36 is also responsive to the transmitted command being the Read buffer command but the firmware update instructing parameter not being appended to the command to exercise control to read out data other than the firmware from the buffer memory 8. When the process of step S123 comes to a close, the processing is completed.

After transmitting the Read buffer command to the DVD-ROM drive, the PC 10 sends encrypted firmware data, which is the firmware data for updating, encrypted in accordance with the stream cipher system, as a binary file to the DVD-ROM drive.

In a step S124, the CPU core 36 accesses the address number N of the buffer memory 8 and the address number 0 of the flash ROM 38 where the firmware is stored.

In a step S125, the CPU core 36 reads out data in terms of a data volume convenient for decoding, as a unit, e.g., every byte, beginning from the address number 0 of the flash ROM 38, for storage in the register in the CPU core 36 or in the RAM 37.

The CPU core 36 reads out plaintext firmware data, stored in the register in the CPU core 36 or in the RAM 37, and encrypts the so read out data in the encryption unit 218 of the DVD decoder 207 to encrypted firmware data. The CPU core 36 writes the encrypted firmware data, in an area beginning from the address number N of the buffer memory 8.

In a step S126, the CPU core 36 verifies whether or not the totality of the firmware data has been read out from the flash ROM 38. If the address number is not M, the CPU core 36 proceeds to a step S127 and, if the address number is M, the CPU core 36 proceeds to a step S128.

In the step S127, the CPU core 36 accesses an address number of the buffer memory 8 incremented by 1 byte and an address number of the flash ROM 38 incremented by 1 byte. When this process comers to a close, the CPU core 36 reverts to the step S125 to read out the firmware data beginning from the accessed address number of the flash ROM 38 to write the encrypted firmware data in the accessed address number of the buffer memory 8.

In the step S128, the CPU core 36 is responsive to the totality of the firmware data being read out from the flash ROM 38 and stored in the buffer memory 8 to transmit the encrypted firmware data stored in the buffer memory 8 to the PC 10.

The encrypted firmware data transmitted is compared in the encrypted state to the original data in the PC 10 to check to see if the two are coincident with each other.

Thus, the PC 10 is able to check whether or not the firmware has been reliably updated in the flash ROM 38 of the DVD-ROM drive.

In the data exchange between the DVD decoder 207 and the CPU 35, plaintext firmware data is transmitted. In this case, leakage of the firmware data may be prohibited by using mounting level artifices, such as not allowing the exposure of the semiconductor package terminal portions, or proper wiring.

It should be noted that, in general, the program executed on e.g., a PC (personal computer) is stored in an auxiliary storage device, such as a hard disc (HD), and is loaded in a main memory device, such as RAM (random access memory) on PC power up. The CPU reads in the program loaded in the main memory device to execute the program.

Thus, when the program executed by the CPU is to be loaded on the main memory device, an IPL (Initial Program Loader), resident in the CPU core or initially read in from the HD, is used.

In the DVD-ROM drive, explained as the first embodiment with reference to Fig. 1 and in the DVD-ROM drive, explained as the second embodiment with reference to Fig.8, there are occasions where the CPU be provided on the DVD decoder. In this case, the CPU provided on a DVD decoder operates similarly to the PC described above to read out the program stored in the external storage device to the RAM to execute the program read out to the RAM to carry out preset processing such as DVD decoding.

Thus, the program, stored in the external storage device, is apt to be underlooked when read out to the RAM within the DVD decoder to give rise to such act as program analysis or tampering, and hence the program needs to be stored in the encrypted state.

In the following explanation, the program executed by the CPU provided on the DVD decoder is termed a microprogram, while microprogram data in the encrypted state is termed the encrypted microprogram data.

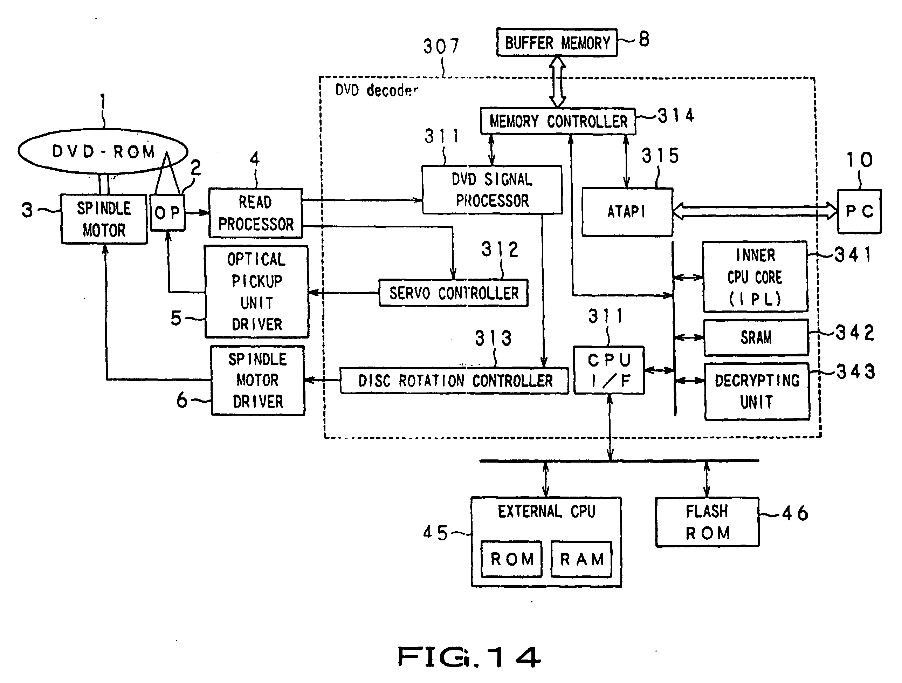

The DVD-ROM drive, shown as a third embodiment in Fig.14 includes a DVD decoder 307, corresponding to the DVD decoder 7 of Fig.1 provided internally with a CPU core 341, an SRAM 342 and a decoder 343. The DVD-ROM drive is otherwise the same in structure as the DVD-ROM drive shown in Fig.1. The internal core 341, SRAM 342 and the decoder 343 are connected over an internal bus to a memory controller 314 and to a CPU I/F 316. The DVD-ROM drive, shown in Fig.14, includes an external CPU 45, and a flash ROM 46, having stored the encrypted microprogram data, which is to be read into the DVD decoder 307.

The internal CPU core 341 is a micro-controller for controlling the DVD decoder 307. This internal CPU core 341 has stored therein an IPL which is a program for allowing the microprogram the internal CPU core executes to be read into the SRAM 342. The IPL is booted on power up of the DVD-ROM drive.

The SRAM 342 is a main memory device for the internal CPU core 341 in which to store micro-program data executed by the internal CPU core 341. In the SRAM 342, the encrypted micro-program data, read out by the IPL from the flash ROM 46, is decoded by the decoder 343 and stored.

The decoder 343 is a decoding circuit for decoding the microprogram data stored encrypted in the flash ROM 46 (encrypted microprogram data) to transfer the decrypted data to a program area of the SRAM 342. The decoder 343 decodes microprogram data encrypted in accordance with the common key cipher system (block cipher or stream cipher system).

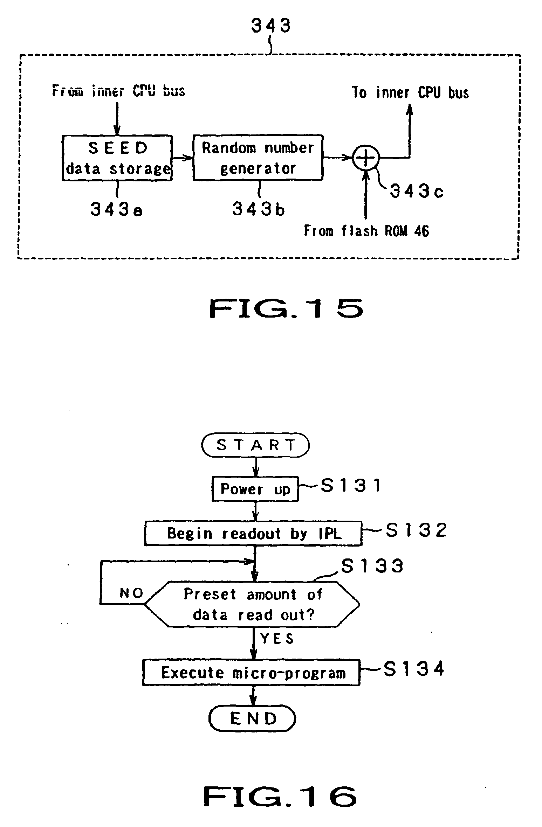

When adapted for coping with the stream cipher, the decoder 343 includes an SEED data storage unit 343a, a random number generatingunit 343b and an exclusive-OR unit 343c, as shown in Fig.15.

The SEED data storage unit 343a has stored therein SEED data, which is an initial input value to the random number generating unit 343b and which corresponds to the common key, and outputs the stored SEED data to the random number generating unit 343b, responsive to a command from the internal CPU core 341.

The SEED data, stored in the SEED data storage unit 343a, may be of a pre-stored fixed value, or can be optionally set from the internal CrU core 341.

The random number generating unit 343b is responsive to the SEED data input from the SEED data storage unit 343a to generate random numbers, in accordance with a preset algorithm, to output the so generated random numbers to the exclusive-OR unit 343c.

The exclusive-OR unit 343c takes an Ex-Or of the encrypted microprogram data read out from the flash ROM 46 in terms of a preset data length as a unit, and the random numbers output from the random number generating unit 343b, by way of decrypting the microprogram data, and outputs the decrypted plaintext microprogram data over internal CPU bus to the SRAM 342 in the DVD decoder 307.

The CPU I/F 316 of the DVD decoder 307 also has a protecting function such that the microprogram data stored in the SRAM 342 in the DVD decoder 307, the SEED data stored in the SEED data storage unit 343a of the decoder 343 or the random number generating algorithm of the random number generating unit 343b cannot be referred to on the user level. This allows for imposing limitations on taking out the decrypted plaintext microprogram data or the decrypting function of decrypting the encrypted microprogram data.

The external CPU 45 is a controller for comprehensively controlling the DVD-ROM drive, and includes an arithmetic logic circuit, an adder or a register for executing arithmetic operations or comparative decisions.

The flash ROM 46 is a so-called flash memory, such as EEPROM, which is an electrically erasable programmable ROM. The Sash ROM 46 has stored therein encrypted microprogram data which is the encrypted program of the internal CPU core 341.

Using the flowchart of Fig. 16, the operation in booting the DVD-ROM drive shown in Fig.14 is explained.

In a step S131, the IPL, resident in the internal CPU core 341, is booted on power up and resetting. Simultaneously with the booting of the IPL, the decoder 343 is initialized by the random number generating unit 343b taking in the SEED data.

In a step S132, the encrypted microprogram data stored in the flash ROM 46 begins to be read out, by the IPL executed on the internal CPU core 341, beginning from the leading address of the flash ROM 46. The encrypted microprogram data, as read out, is input to the decoder 343 and Ex-Ored with output data of the random number generating unit 343b, so as to be decoded to the plaintext microprogram data. The decoded microprogram data is written in the SRAM 342.

In a step S133, it is verified, by the IPL executed on the internal CPU core 341, whether or not a preset amount of the encrypted microprogram data, stored in the flash ROM 46, has been read out. When a preset amount of the encrypted microprogram data has been read out, the internal CPU core 341 proceeds to a step S134. When a preset amount of the encrypted microprogram data has not been read out, readout from the flash ROM 46, decryption in the decoder 343 and writing in the SRAM 342 are carried out.

If, in a step S134, readout from the flash ROM 46 by the IPL executed on the internal CPU core 341 has come to a close, the internal CPU core 341 executes the plaintext microprogram data, written in the SRAM 342, with the value of an enclosed program counter as a leading address of the SRAM 342.

Thus, when the DVD-ROM drive shown in Fig.14 is booted, the encrypted microprogram data, stored in the flash ROM 46, is read out by the IPL, decrypted in the DVD decoder 307 and written in the SRAM 342. Thus, with the microprogram, executed by the internal CPU core 341 of the DVD decoder 307, program analysis or tampering may be prohibited because the deciphering occurs within the DVD decoder 307.

Thus, in updating the firmware of the DVD-ROM drive, the firmware is encrypted and transferred from the PC 10 to the DVD-ROM drive and decrypted in the CPU 9 shown in Fig.1 or in the DVD decoder 207 shown in Fig.8 so as to be updated to the flash ROM in the CPU such as to prohibit analysis or tampering at the time of updating. Alternatively, the program loaded in booting, such as DVD-ROM drive shown in Fig.14, is read out to a decoding circuit in the encrypted state and decrypted in this circuit to prohibit analysis or tampering of the program at the time of loading.

Meanwhile, in the DVD-ROM drive, explained with reference to Fig.14, the microprogram stored in the SRAM 342 is supplied from the flash ROM 46connected to the DVD decoder 307 over a bus. This microprogram may, for example, be a read-only memory (ROM), a disc-shaped recording medium, or a removable semiconductor memory.

In the DVD-ROM drive, explained with reference to Fig.14, the processing of reading out the microprogram from the flash ROM 46 through the decryption unit 343 to the SRAM 342 is executed by the IPL provided to the internal CPU core 341 enclosed in the DVD decoder 307. Alternatively, this processing may be carried out under control by a CPU provided externally of the DVD decoder 307, such as by the external CPU 45.

It may, however, be contemplated that, if program leakage after decryption of the encrypted program could be prohibited, the program, as encrypted, may be tampered.

For example, if, in the DVD-ROM drive shown in Fig.1, the firmware as encrypted is tampered, the tampered data is stored in the flash ROM 22, thus possibly giving rise to illicit contents duplication or drive malfunctions.

In order to combat this, such a technique may be contemplated in which a program for verifying the fact of program tampering is attached to the program body to be updated to transmit the resulting program body to the DVD-ROM drive. It this verification program is attached to the program body to be updated, and the DVD-ROM drive executes this updated program, the verification program, attached to the program body, is first booted to verify whether or not the updated program has been tampered.

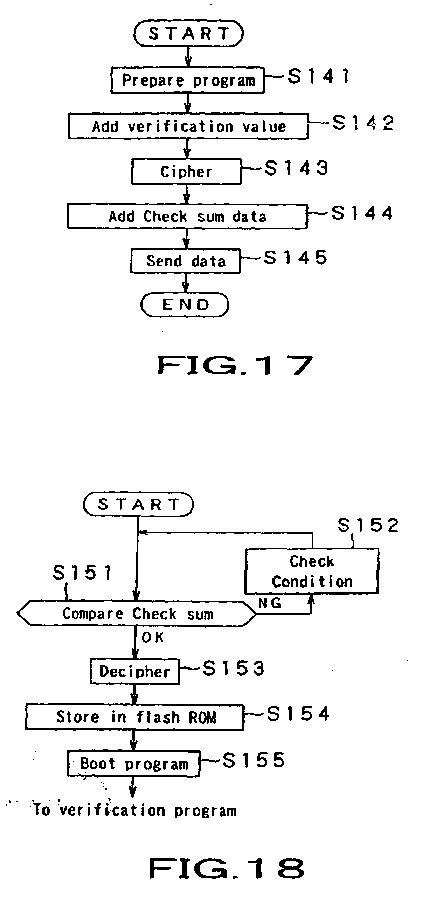

Using the flowchart, shown in Figs.17 to 19, the operation of updating the program such as to prohibit the encrypted data from being tampered is now explained. It is noted that the DVD-ROM drive shown in Fig.8 is used as a program updating drive only for explanation sake.

First, using the flowchart, shown in Fig. 17, the operation until the program body, having the verification program attached thereto, is routed to the DVD-ROM drive, is explained.

In a step S141, a program for transmission to the DVD-ROM drive is prepared by for example a drive manufacturer. To the program body prepared is attached the aforementioned verification program for verifying the program tampering described above.

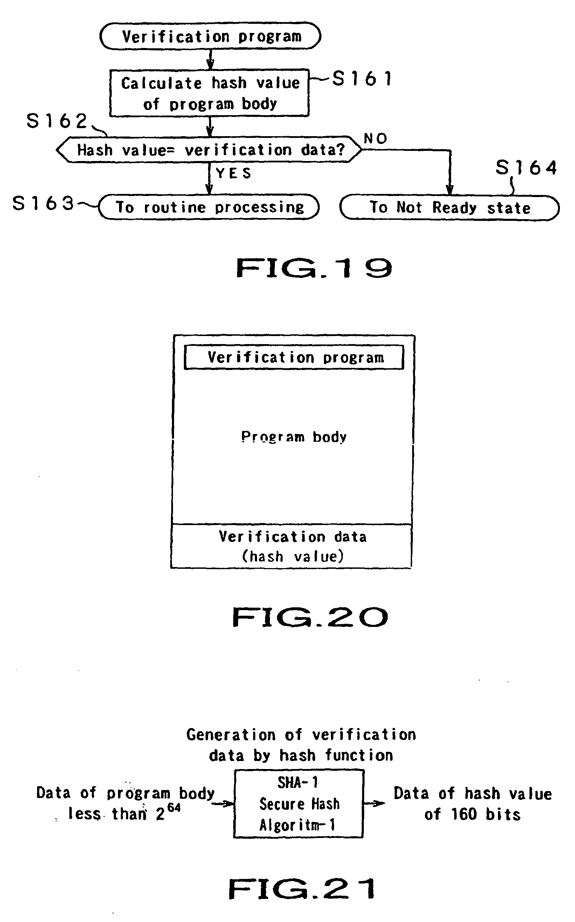

In a step S142, the drive manufacturer generates verification data from a program distributed to attach the so generated verification data to the program, as shown in Fig.20.

This verification data is a hash value obtained on executing the processing on the program body using the hash function. For example, SHA (Secure Hash Algorithm)-1, further improved from SHA, provided by the standardization organization NIST, belonging to the US Department of Commerce, may be used as this hash function, as shown for example in Fig.21. This SHA-1 is an algorithm for generating hash values of 160 bit length (verification data) from a data length less than 2⁶⁴.

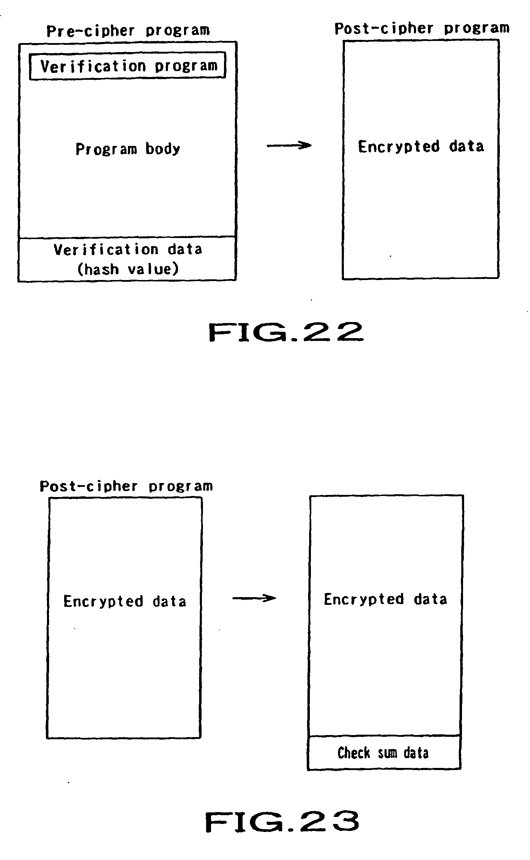

in a step S143, the drive manufacturer encrypts the program, added by the verification data, so as to encompass the verification data, as shown in Fig.22.

In a step S144, the drive manufacturer calculates Check Sum data from the encrypted program to attach the so calculated Check Sum data, as shown in Fig.23. The data attached may also be hash values, found from the hash functions, in place of the Check Sum data. The program, thus added by the Check Sum data, becomes data that permits of transmission.

The data, that permits of transmission, is delivered to the user (PC 10), using for example the ROM medium.

In a step S145, the PC 10 transmits to the DVD-ROM drive the data (program) which now permits of transmission.

Using the flowchart, shown in Fig.18, the operation of the DVD-ROM drive, receiving the program, in which measures have been taken to prevent tampering of encrypted data transmitted from the PC 10, is now explained.

In a step S151, on receipt of a program, transmitted from the PC 10 along with the Write buffer command, the DVD-ROM drive compares the Check Sum data, attached to the program, to the sum value of the program data transmitted encrypted. If the two values are not coincident with each other, the DVD-ROM drive proceeds to a step S152 and, if otherwise, the DVD-ROM drive proceeds to a step S153.

In the step S152, the DVD-ROM drive informs the PC 10 of the fact that the encrypted program data has not been transmitted correctly, as demonstrated from the results of comparison of the Check Sum data, by terminating the command with Check Condition Status. The DVD-ROM drive then reverts to the step S151.

In the step S153, the decryption unit 17 decrypts the encrypted microprogram data. The verification data are attached to the decrypted data, while the verification program is stated in the program body.

In a step S154, the decrypted program data is stored in the flash ROM 38.

In a step S155, when the program stored in the flash ROM 38 is booted, the verification program is run first.

Using the flowchart shown in Fig.19, the operation of the verification program is explained.

In a step S161, the booted verification program calculates the hash values of the program body by the hash functions.

In a step S162,the verification program compares the verification data attached to the program body to the calculated hash value. If the two values are coincident with each other, the verification program proceeds to a step S163. If the two values are not coincident with each other, the verification program proceeds to a step S164.

In the step S163, the DVD-ROM drive executes the program body stored in the flash ROM 38, in response to the decision that the program stored in the flash ROM 38 is not tampered, with the attached verification data coinciding with the calculated hash values.

In the step S164, the DVD-ROM drive falls under a Not Ready state, or in a stabilized non-operating state, in response to the decision that the program stored in the flash ROM 38 is tampered, with the attached verification data not coinciding with the calculated hash values.

By attaching to the program body, being transmitted, the verification data calculated from the hash function, and transmitting the resulting program body, the DVD-ROM drive is able to verify the fact of tampering, even in cases wherein the encrypted data itself has been tampered.

In the DVD-ROM drive according to the above-described first and second embodiments of the present invention, the firmware to be updated is transmitted from the PC 10. Alternatively, the firmware may be recorded on the DVD-ROM 1 reproducible on for example the DVD-ROM drive. By storing the encrypted firmware data as a file in the DVD-ROM 1, the DVD-ROM drive is able to reproduce this DVD-ROM 1 to acquire the firmware to be updated.

In similar manner, in the DVD-ROM drive according to the third embodiment of the present invention, the DVD-ROM 1, having recorded the encrypted microprogram data as a file, may be reproduced to load the microprogram.

Meanwhile, the program booted in updating the firmware written in the boot ROM 21 of the DVD-ROM drive, shown as the first embodiment of the present invention, may be written in the DVD-ROM 1. The firmware may be updated by the DVD-ROM drive reproducing the DVD-ROM 1.

In similar manner, the program that is booted in updating the firmware on the DVD-ROM drive, according to the second embodiment of the present invention, may be written in the DVD-ROM 1. The firmware may be updated by the DVD-ROM drive reproducing the DVD-ROM 1 as discussed above.

In similar manner, the program that is booted in loading the microprogram on the DVD-ROM drive, according to the third embodiment of the present invention, may be written in the DVD-ROM 1. The microprogram may be loaded by the DVD-ROM drive reproducing the DVD-ROM 1 as discussed above.

Moreover, in the DVD-ROM drive, shown as the first or second embodiment of the present invention, a slot for a semiconductor memory, associated with the semiconductor memory, such as a Memory-Stick (registered trademark), may be provided, and the encrypted firmware data may be recorded in the semiconductor memory in place of the DVD-ROM 1 to update the firmware.

In similar manner, in a DVD-ROM drive according to the third embodiment of the present invention, the encrypted microprogram data may be recorded in the removable semiconductor memory to load the microprogram.

In the first to third embodiments of the present invention, the DVD-ROM drive is used. The present invention, however, is not limited to this configuration, but may be applied to a disc apparatus capable of recording and/or reproducing a CD-ROM, a CD-R, CD-RW, a DVD-RAM, a DVD-R/RW or a DVD+R/RW, having data recorded thereon.

Although he DVD-ROM drive is used in the first to third embodiments of the present invention, the present invention is not limited to this configuration but may be applied to processing apparatus in need of some or other security in general.

Although the encryption technique employing a common key is used as a technique for encrypting or decrypting the firmware or the microprogram, the present invention is not limited to this configuration. For example, the public key system or other encryption algorithm may also be used.

Furthermore, although the DVD-ROM drive of the first to third embodiments of the present invention is designed to process the firmware or the microprogram, it may be data that is processed, in other words, the data such as setting values of a rewritable register or memory in the DVD-ROM drive may for example be updated or set.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus comprising:
encrypted program data receiving means (31) for receiving encrypted program data having encrypted firmware, encrypted first verification data and an encrypted verification program using a preset encryption key;
storage means (22) for storing said program; decrypting means (20, 21, 21a) for decrypting said program data into firmware, first verification data and verification program respectively, using a preset decryption key;
program readout means for reading out said program stored in said storage means;
controlling means (20) for controlling a preset operation of the information processing apparatus based on said program read out by said readout means; and
wherein in use said controlling means calculates a second verification data by said verification program from said firmware before executing said firmware, and compares said calculated second verification data to said first verification data ;
said readout means reading out said program responsive to coincidence of the first verification data and the second verification data compared to each other by said controlling means.

2. The information processing apparatus according to claim 1 having a controlling unit including said storage means and said controlling means, said controlling means being operable to read out a second program stored in said storage means and to control a second preset operation of the information processing apparatus based on said second program read out, said apparatus comprising:
program transmitting means for transmitting said program, decrypted by said decrypting means from said encrypted program data, to said controlling unit;
said controlling unit including program receiving means for receiving said program transmitted by said transmitting means; and
program writing means for writing said program received by said program receiving means in said storage means.

3. The information processing apparatus according to claim 1 wherein
the apparatus includes said controlling means, said encrypted program data receiving means, said decrypting means, said storage means and the program readout means in a controlling unit and wherein said controlling unit includes takeout controlling means for limiting the takeout from an external device of said program decrypted by said decrypting means and said program stored in said storage means.

4. The information processing apparatus according to claim 1, 2 or 3 wherein said encrypted program data receiving means receives encrypted program data transmitted from an external device.

5. The information processing apparatus according to claim 1, 2 or 3 further comprising:
reproducing means for reproducing a recording medium having recorded thereon encrypted program data which is said program encrypted with a preset encryption key;
said encrypted program data receiving means receiving the encrypted program data reproduced by said reproducing means.

6. The information processing apparatus according to claim 5 when dependent on claim 2, wherein said controlling means controls said reproducing means for reproducing said recording medium in response to a program update request.

7. The information processing apparatus according to claim 1 or 3 having:
encrypted program data storage means having stored thereon said encrypted program data, and further comprising;
encrypted program data readout means for reading out said encrypted program data stored in said encrypted program data storage means;
said encrypted program data receiving means receiving the encrypted program data read out by said encrypted program data readout means.

8. The information processing apparatus according to claim 1, 2 or 3 wherein the encrypted program data received by said encrypted program data receiving means includes encrypted verification data obtained on encryption with said preset encryption key of first verification data, calculated by preset calculations from program data of said program, and a verification program, which is a program for executing said preset calculations, and an encryption verification program.

9. The information processing apparatus according to claim 8 wherein
in decrypting said encrypted program data, said decrypting means decrypts said encrypted verification data and the encrypted verification program into said first verification data and said verification program, respectively, using said preset decryption key;
said storage means stores said first verification data and the verification program, decrypted by said decrypting means;
said controlling means calculates second verification data, from the program data of said program, stored in said storage means, based on said verification program, before executing said program, and compares the calculated second verification data to the first verification data stored in said storage means;
said readout means reading out said program stored in said storage means responsive to coincidence of the first verification data and the second verification data compared to each other by said controlling means.

10. The information processing apparatus according to claim 2 wherein
a wiring interconnecting said program transmitting means and said program receiving means is provided on an inner layer of a multi-layered substrate.

11. The information processing apparatus according to claim 2 wherein said controlling unit is a ball grid array.

12. The information processing apparatus according to claim 7 when dependent on claim 3, further comprising:
second controlling means for reading out said encrypted program data stored in said encrypted program data storage means;
said encrypted program data receiving means receiving said encrypted program data read out by said second controlling means.

13. A circuit device comprising, in integrated form, an information processing apparatus according to claim 3 or 12 or any one of claims 4, 5, 7, 8 or 9 when dependent on claim 3.

14. A program loading method for loading a program for controlling a preset operation of an information processing apparatus, to said information processing apparatus, said method comprising:
an encrypted program data receiving step of receiving encrypted program data having encrypted firmware, encrypted first verification data and an encrypted verification program, encrypted with a preset encryption key;
a decrypting step of decrypting said program data into firmware, first verification data and verification program respectively, using a preset decryption key;
a storage step of storing said program in storage means;
calculating a second verification data by said verification program from said firmware;
comparing said calculated second verification data with said first verification data, and;
reading out said program responsive to coincidence of the first verification data and the second verification data when compared to each other.

15. A program loading method according to claim 14, wherein said information processing apparatus comprises a controlling unit including said storage means having stored therein a second program and controlling means for reading out said second program stored in said storage means and for controlling a second preset operation of said information processing apparatus based on said second program as read out;
wherein said encrypted program data receiving step is responsive to a program update request requesting the updating of said program;
said method comprising:
a program transmitting step of transmitting said program, decrypted from said encrypted program data by said decrypting step;
a program receiving step of receiving said program transmitted to said controlling unit by said program transmitting step; and
a program writing step of writing said program, received by said program receiving step, in said storage means.

16. The program loading method according to claim 14 further comprising:
a takeout limiting step of limiting takeout from an external device of said decrypted program.

17. The program loading method according to claim 14, 15 or 16 wherein said encrypted program data receiving step receives said encrypted program data transmitted from an external device.

18. The program loading method according to claim 14, 15 or 16 further comprising:
a reproducing step of reproducing a recording medium, having recorded thereon encrypted program data which is said program encrypted using a preset encryption key;
said encrypted program data receiving step receiving said encrypted program data reproduced in said reproducing step.

19. The program loading method according to claim 18 when dependent on claim 15, wherein said reproducing step reproducing said recording medium is responsive to receipt of said program update request.

20. The program loading method according to claim 14 further comprising:
an encrypted program data readout step of reading out said encrypted program data form encrypted program data storage means in said information processing apparatus where said encrypted program data are stored;
said encrypted program data receiving step receiving said encrypted program data read out in said encrypted program data readout step.

21. The program loading method according to claim 14, 15 or 16 wherein said program data receiving step receives said encrypted program data including encrypted verification data, obtained on encrypting, using said preset encryption key, first verification data, calculated by preset calculations from program data of said program, and a verification program which is a program for executing said preset calculations, and an encryption verification program.

22. The program loading method according to claim 21 wherein said decrypting step decrypts, in decrypting said encrypted program data, said encrypted verification data and the encrypted verification program into said first verification data, and said verification program, using said preset decryption key;
said storage step stores said first verification data and the verification program, decrypted by said decrypting step, in said storage means;
said controlling step including a verification data calculating step of calculating second verification data, from the program data of said program, stored in said storage means, based on said verification program, before executing said program, and a verification data comparing step of comparing the calculated second verification data to the first verification data stored in said storage means;
said readout step reading out said program stored in said storage means responsive to coincidence of the first verification data and the second verification data compared to each other by said verification data comparing step.

23. A recording medium having recorded thereon a loading program for loading a program, configured for controlling a preset operation of an information processing apparatus, to said information processing apparatus, said loading program comprising program code for carrying out a method according to any one of claims 14 to 22.

## Patentansprüche

1. Informationsverarbeitungsvorrichtung, aufweisend:
eine Verschlüsseltprogrammdaten-Empfangseinrichtung (31) zum Empfang von unter Benutzung eines voreingestellten Verschlüsselungsschlüssels verschlüsselten Programmdaten, die verschlüsselte Firmware, verschlüsselte erste Verifikationsdaten und ein verschlüsseltes Verifikationsprogramm aufweisen,
eine Speichereinrichtung (22) zum Speichern des Programms,
eine Entschlüsselungseinrichtung (20, 21, 21a) zum Entschlüsseln der Programmdaten jeweils in Firmware, erste Verifikationsdaten und ein Verifikationsprogramm unter Benutzung eines voreingestellten Entschlüsselungsschlüssels,
eine Programmausleseeinrichtung zum Auslesen des in der Speichereinrichtung gespeicherten Programms,
eine Steuerungseinrichtung (20) zur Steuerung einer voreingestellten Operation der Informationsverarbeitungsvorrichtung auf Basis des von der Ausleseeinrichtung ausgelesenen Programms, wobei im Betrieb
die Steuerungseinrichtung durch das Verifikationsprogramm von der Firmware vor Ausführung der Firmware zweite Verifikationsdaten berechnet und die berechneten zweiten Verifikationsdaten mit den ersten Verifikationsdaten vergleicht, wobei
die Ausleseeinrichtung das Programm in Reaktion auf eine Koinzidenz der von der Steuerungseinrichtung miteinander verglichenen ersten Veriftkationsdaten und zweiten Verifikationsdaten ausliest.

2. Informationsverarbeitungsvorrichtung nach Anspruch 1, die eine die Speichereinrichtung und die Steuerungseinrichtung aufweisende Steuerungseinheit aufweist, wobei die Steuerungseinrichtung zum Auslesen eines in der Speichereinrichtung gespeicherten zweiten Programms und zum Steuern einer zweiten voreingestellten Operation der Informationsverarbeitungsvorrichtung auf Basis des ausgelesenen zweiten Programms betriebsfähig ist, wobei die Vorrichtung aufweist:
eine Programmübertragungseinrichtung zur Übertragung des von der Entschlüsselungseinrichtung von den verschlüsselten Programmdaten entschlüsselten Programms zur Steuerungseinheit, wobei
die Steuerungseinheit eine Programmempfangseinrichtung zum Empfang des von der Übertragungseinrichtung übertragenen Programms und
eine Programmschreibeinrichtung zum Schreiben des von der Programmempfangseinrichtung empfangenen Programms in die Speichereinrichtung aufweist.

3. Informationsverarbeitungsvorrichtung nach Anspruch 1, wobei
die Vorrichtung die Steuerungseinrichtung, die Verschlüsseltprogrammdaten-Empfangseinrichtung, die Entschlüsselungseinrichtung, die Speichereinrichtung und die Programmausleseeinrichtung in einer Steuerungseinheit aufweist, und wobei die Steuerungseinheit eine Entnahmesteuerungseinrichtung zur Einschränkung der Entnahme des von der Entschlüsselungseinrichtung entschlüsselten Programms von einer externen Einrichtung und des in der Speichereinrichtung gespeicherten Programms aufweist.

4. Informafionsverarbeitungsvorrichtung nach Anspruch 1, 2 oder 3, wobei die Verschlüsseltprogrammdaten-Empfangseinrichtung von einer externen Einrichtung übertragene verschlüsselte Programmdaten empfängt.

5. Informationsverarbeitungsvorrichtung nach Anspruch 1, 2 oder 3, außerdem aufweisend:
eine Wiedergabeeinrichtung zur Wiedergabe eines Aufzeichnungsmediums, auf dem verschlüsselte Programmdaten aufgezeichnet sind, die das mit einem voreingestellten Verschlüsselungsschlüssel verschlüsselte Programm sind, wobei
die Verschlüsseltprogrammdaten-Empfangseinrichtung die von der Wiedergabeeinrichtung wiedergegebenen verschlüsselten Programmdaten empfängt.

6. Informationsverarbeitungsvorrichtung nach Anspruch 2 und Anspruch 5, wobei die Steuerungseinrichtung die Wiedergabeeinrichtung zur Wiedergabe des Aufzeichnungsmediums in Reaktion auf eine Programmaktualisierungsanforderung steuert.

7. Informationsverarbeitungsvorrichtung nach Anspruch 1 oder 3, aufweisend:
eine Verschlüsseltprogrammdaten-Speichereinrichtung, auf der die verschlüsselten Programmdaten gespeichert sind, und außerdem aufweisend:
eine Verschlüsseltprogrammdaten-Ausleseeinrichtung zum Auslesen der in der Verschlüsseltprogrammdaten-Speichereinrichtung gespeicherten verschlüsselten Programmdaten, wobei
die Verschlüsseltprogrammdaten-Empfangseinrichtung die von der Verschlüsseltprogrammdaten-Ausleseeinrichtung ausgelesenen verschlüsselten Programmdaten empfängt.

8. Informationsverarbeitungsvorrichtung nach Anspruch 1, 2 oder 3, wobei die von der Verschlüsseltprogrammdaten-Empfangseinrichtung empfangenen verschlüsselten Programmdaten verschlüsselte Verifikationsdaten, die bei der Verschlüsselung mit dem voreingestellten Verschlüsselungsschlüssel der durch voreingestellte Berechnungen aus Programmdaten des Programms berechneten ersten Verifikationsdaten erhalten werden, ein Verifikationsprogramm, das ein Programm zur Ausführung der voreingestellten Berechnungen ist, und ein Verschlüsselungsverifikationsprogramm aufweisen.

9. Informationsverarbeitungsvorrichtung nach Anspruch 8, wobei
bei der Entschlüsselung der verschlüsselten Programmdaten die Entschlüsselungseinrichtung die verschlüsselten Verifikationsdaten und das verschlüsselte Verifikationsprogramm unter Benutzung des voreingestellten Entschlüsselungsschlüssels jeweils in die ersten Verifikationsdaten bzw. das Verifikationsprogramm entschlüsselt,
die Speichereinrichtung die ersten Verifikationsdaten und das Verifikationsprogramm, die von der Entschlüsselungseinrichtung entschlüsselt sind, speichert,
die Steuerungseinrichtung vor Ausführung des Programms von den in der Speichereinrichtung gespeicherten Programmdaten des Programms auf Basis des Verifikationsprogramms zweite Verifikationsdaten berechnet und die berechneten zweiten Verifikationsdaten mit den in der Speichereinrichtung gespeicherten ersten Verifikationsdaten vergleicht,
die Ausleseeinrichtung das in der Speichereinrichtung gespeicherte Programm in Reaktion auf eine Koinzidenz der von der Steuerungseinrichtung miteinander verglichenen ersten Verifikationsdaten und zweiten Verifikationsdaten ausliest.

10. Informationsverarbeitungsvorrichtung nach Anspruch 2, wobei eine die Programmübertragungseinrichtung und die Programmempfangseinrichtung miteinander verbindende Verdrahtung auf einer inneren Schicht eines mehrschichtigen Substrats bereitgestellt ist.

11. Informationsverarbeitungsvorrichtung nach Anspruch 2, wobei die Steuerungseinheit ein Ball-Grid-Array ist.

12. Informationsverarbeitungsvorrichtung nach Anspruch 3 und Anspruch 7, außerdem aufweisend:
eine zweite Steuerungseinrichtung zum Auslesen der in der Verschlüsseltprogrammdaten-Speichereinrichtung gespeicherten verschlüsselten Programindaten, wobei
die Verschlüsseltpxogrammdaten-Empfangseinrichtung die von der zweiten Steuerungseinrichtung ausgelesenen verschlüsselten Programmdaten empfängt.

13. Schaltungseinrichtung mit einer eine Informationsverarbeitungsvorrichtung nach Anspruch 3 oder 12 oder Anspruch 3 und einem der Ansprüche 4, 5, 7, 8 oder 9 in integrierter Form.

14. Programmladeverfahren zum Laden eines Programms zur Steuerung einer voreingestellten Operation einer Informationsverarbeitungsvorrichtung auf die Informationsverarbeitungsvorrichtung, wobei das Verfahren aufweist:
einen Verschlüsseltprogrammdaten-Empfangsschritt zum Empfang von mit einem voreingestellten Verschlüsselungsschlüssel verschlüsselten Programmdaten, die verschlüsselte Firmware, verschlüsselte erste Verifikationsdaten und ein verschlüsseltes Verifikationsprogramm aufweisen,
einen Entschlüsselungsschritt zum Entschlüsseln der Programmdaten jeweils in Firmware, erste Verifikationsdaten bzw. Verifikationsprogramm unter Benutzung eines voreingestellten Entschlüsselungsschlüssels,
einen Speicherschritt zum Speichern des Programms in einer Speichereinrichtung,
Berechnen von zweiten Verifikationsdaten durch das Verifikationsprogramm von der Firmware,
Vergleichen der berechneten zweiten Verifikationsdaten mit den ersten Verifikationsdaten und
Auslesen des Programms in Reaktion auf eine Koinzidenz der ersten Verifikationsdaten und der zweiten Verifikationsdaten, wenn sie miteinander verglichen werden.

15. Programmladeverfahren nach Anspruch 14, wobei die Informationsverarbeitungsvorrichtung eine Steuerungseinheit aufweist, welche die Speichereinrichtung, in der ein zweites Programm gespeichert ist, und die Steuerungseinrichtung zum Auslesen des in der Speichereinrichtung gespeicherten zweiten Programms und zur Steuerung einer zweiten voreingestellten Operation der Informationsverarbeitungsvorrichtung auf Basis des ausgelesenen zweiten Programms aufweist,
wobei der Verschlüsseltprogrammdaten-Empfangsschritt auf eine die Aktualisierung des Programms anfordernde Programmaktualisierungsanforderung reagiert, wobei
das Verfahren aufweist:
einen Programmübertragungsschritt zur Übertragung des von den verschlüsselten Programmdaten durch den Entschlüsselungsscbritt entschlüsselten, Programms,
einen Programmempfangsschritt zum Empfang des beim Programmübertragungsschritt zur Steuerungseinheit übertragenen Programms, und
einen Programmschreibschritt zum Schreiben des beim Programmempfangsschritt empfangenen Programms in die Speichereinrichtung.

16. Programmladeverfahren nach Anspruch 14, außerdem aufweisend:
einen Entnalmeeinschränkungsschritt zur Einschränkung einer Entnahme des entschlüsselten Programms von einer externen Einrichtung.

17. Programmladeverfahren nach Anspruch 14, 15 oder 16, wobei der Verschlüsseltprogrammdaten-Empfangsschritt von einer externen Einrichtung übertragene verschlüsselte Programmdaten empfängt.

18. Programmladeverfahren nach Anspruch 14, 15 oder 16, außerdem aufweisend:
einen Wiedergabeschritt zur Wiedergabe eines Aufzeichnungsmediums, auf dem verschlüsselte Programmdaten, die das unter Benutzung eines voreingestellten Verschlüsselungsschlüssels verschlüsselte Programm sind, aufgezeichnet sind, wobei
der Verschlüsseltprogrammdaten-Empfangsschritt die beim Wiedergabeschritt wiedergegebenen verschlüsselten Programmdaten empfängt.

19. Programmladeverfahren nach Anspruch 15 und Anspruch 18, wobei der das Aufzeichnungsmedium wiedergebende Wiedergabeschritt auf einen Empfang der Programmaktualisierungsanforderung reagiert.

20. Programmladeverfahren nach Anspruch 14, außerdem aufweisend:
einen Verschlüsseltprogrammdaten-Ausleseschritt zum Auslesen der verschlüsselten Programmdaten von der Verschlüsseltprogrammdaten-Speichereinrichtung in der Informationsverarbeitungsvorrichtung, wo die verschlüsselten Programmdaten gespeichert sind, wobei
der Verschlüsseltprogrammdaten-Empfangsschritt die beim Verschlüsseltprogrammdaten-Ausleseschritt ausgelesenen verschlüsselten Programmdaten empfängt.

21. Programmladeverfahren nach Anspruch 14,15 oder 16, wobei der Programmdaten-Empfangsschritt die verschlüsselten Programmdaten empfängt, welche die bei der Verschlüsselung unter Verwendung des voreingestellten Verschlüsselungsschlüssels erhaltenen verschlüsselten Verifikationsdaten, die von den Programmdaten des Programms durch voreingestellte Berechnungen berechneten ersten Verifikationsdaten und ein Verifikationsprogramm, das ein Programm zur Ausführung der voreingestellten Berechnungen ist, und ein verschlüsseltes Verifikationsprogramm aufweisen.

22. Programmladeverfahren nach Anspruch 21, wobei der Entschlüsselungsschritt beim Entschlüsseln der verschlüsselten Programmdaten, der verschlüsselten Verifikationsdaten und des verschlüsselten Verifikationsprogramms in die ersten Verifikationsdaten und das Verifikationsprogramm unter Benutzung des voreingestellten Entschlüsselungsschlüssels entschlüsselt,
der Speicherschritt die ersten Verifikationsdaten und das Verifikationsprogramm, die beim Entschlüsselungsschritt entschlüsselt werden, in der Speichereinrichtung speichert,
der Steuerungsschritt einen Verifikationsdaten-Berechnungsschritt zur Berechnung zweiter Verifikationsdaten von den in der Speichereinrichtung gespeicherten Programmdaten des Programms auf Basis des Verifikationsprogramms vor Ausführung des Programms und einen Verifikationsdaten-Vergleichsschritt zum Vergleichen der berechneten zweiten Verifikationsdaten mit den in der Speichereinrichtung gespeicherten ersten Verifikationsdaten aufweist, wobei
der Ausleseschritt das in der Speichereinrichtung gespeicherte Programm in Reaktion auf eine Koinzidenz der ersten Verifikationsdaten und der zweiten Verifikationsdaten, die beim Verifikationsdaten-Vergleichsschritt miteinander verglichen werden, ausliest.

23. Aufzeichnungsmedium, auf dem ein Ladeprogramm zum Laden eines Programms, das zur Steuerung einer voreingestellten Operation einer Informationsverarbeitungsvorrichtung konfiguriert ist, auf die Informationsverarbeitungsvorrichtung, wobei das Ladeprogramm einen Programmcode zur Ausführung eines Verfahrens nach einem der Ansprüche 14 bis 22 aufweist.

## Revendications

1. Dispositif de traitement d'informations comprenant :
un moyen de réception de données de programme cryptées (31) destiné à recevoir des données de programme cryptées comprenant un micro-programme crypté, des premières données de vérification cryptées et un programme de vérification crypté utilisant une clé de cryptage préétablie,
un moyen de mémorisation (22) destiné à mémoriser ledit programme, un moyen de décryptage (20, 21, 21a) destiné à décrypter lesdites données de programme en un micro-programme, en premières données de vérification et en un programme de vérification respectivement, en utilisant une clé de décryptage préétablie,
un moyen de lecture de programme destiné à lire ledit programme mémorisé dans ledit moyen de mémorisation,
un moyen de commande (20) destiné à commander une opération préétablie du dispositif de traitement d'informations sur la base dudit programme lu par ledit moyen de lecture, et
dans lequel, en utilisation, ledit moyen de commande calcule des secondes données de vérification par le biais dudit programme de vérification à partir dudit micro-programme avant d'exécuter ledit micro-programme, et compare lesdites secondes données de vérification calculées auxdites premières données de vérification,
ledit moyen de lecture lisant ledit programme en réponse à une coïncidence des premières données de vérification et des secondes données de vérification comparées les unes aux autres par ledit moyen de commande.

2. Dispositif de traitement d'informations selon la revendication 1, comportant une unité de commande comprenant ledit moyen de mémorisation et ledit moyen de commande, ledit moyen de commande pouvant être mis en oeuvre pour lire un second programme mémorisé dans ledit moyen de mémorisation et pour commander une seconde opération préétablie du dispositif de traitement d'informations sur la base dudit second programme lu, ledit dispositif comprenant :
un moyen de transmission de programme destiné à transmettre ledit programme, décrypté par ledit moyen de décryptage à partir desdites données de programme cryptées, à ladite unité de commande,
ladite unité de commande comprenant un moyen de réception de programme destiné à recevoir ledit programme transmis par ledit moyen de transmission, et
un moyen d'écriture de programme destiné à écrire ledit programme reçu par ledit moyen de réception de programme dans ledit moyen de mémorisation.

3. Dispositif de traitement d'informations selon la revendication 1, dans lequel
le dispositif comprend ledit moyen de commande, ledit moyen de réception de données de programme cryptées, ledit moyen de décryptage, ledit moyen de mémorisation et le moyen de lecture de programme dans une unité de commande et où ladite unité de commande comprend un moyen de commande d'extraction destiné à limiter l'extraction à partir d'un dispositif externe dudit programme décrypté par ledit moyen de décryptage et dudit programme mémorisé dans ledit moyen de mémorisation.

4. Dispositif de traitement d'informations selon la revendication 1, 2 ou 3 dans lequel ledit moyen de réception de données de programme cryptées reçoit des données de programme cryptées transmises depuis un dispositif externe.

5. Dispositif de traitement d'informations selon la revendication 1, 2 ou 3 comprenant en outre :
un moyen de reproduction destiné à reproduire un support d'enregistrement comportant enregistrées sur celui-ci des données de programme cryptées qui constituent ledit programme crypté avec une clé de cryptage préétablie,
ledit moyen de réception de données de programme cryptées recevant les données de programme cryptées reproduites par ledit moyen de reproduction.

6. Dispositif de traitement d'informations selon la revendication 5, lorsqu'elle dépend de la revendication 2, dans lequel ledit moyen de commande commande ledit moyen de reproduction destiné à reproduire ledit support d'enregistrement en réponse à une demande de mise à jour de programme.

7. Dispositif de traitement d'informations selon la revendication 1 ou 3, comportant :
un moyen de mémorisation de données de programme cryptées comportant mémorisées sur celui-ci lesdites données de programme cryptées, et comprenant en outre
un moyen de lecture de données de programme cryptées destiné à lire lesdites données de programme cryptées mémorisées dans ledit moyen de mémorisation de données de programme cryptées,
ledit moyen de réception de données de programme cryptées recevant les données de programme cryptées lues par ledit moyen de lecture de données de programme cryptées.

8. Dispositif de traitement d'informations selon la revendication 1, 2 ou 3 dans lequel des données de programme cryptées reçues par ledit moyen de réception de données de programme cryptées comprend des données de vérification cryptées obtenues lors d'un cryptage avec ladite clé de cryptage préétablie de premières données de vérification, calculées par le biais de calculs préétablis à partir de données de programme dudit programme, et un programme de vérification, qui est un programme destiné à exécuter lesdits calculs préétablis, et un programme de vérification de cryptage.

9. Dispositif de traitement d'informations selon la revendication 8, dans lequel
lors du décryptage desdites données de programme cryptées, ledit moyen de décryptage décrypte lesdites données de vérification cryptées et le programme de vérification crypté en lesdites premières données de vérification et en ledit programme de vérification, respectivement, en utilisant ladite clé de décryptage préétablie,
ledit moyen de mémorisation mémorise lesdites premières données de vérification et le programme de vérification, décryptés par ledit moyen de décryptage,
ledit moyen de commande calcule des secondes données de vérification, à partir des données de programme dudit programme, mémorisées dans ledit moyen de mémorisation, sur la base dudit programme de vérification, avant d'exécuter ledit programme, et compare les secondes données de vérification calculées aux premières données de vérification mémorisées dans ledit moyen de mémorisation,
ledit moyen de lecture lisant ledit programme mémorisé dans ledit moyen de mémorisation en réponse à une coïncidence des premières données de vérification et des secondes données de vérification comparées les unes aux autres par ledit moyen de commande.

10. Dispositif de traitement d'informations selon la revendication 2, dans lequel
un câblage interconnectant ledit moyen de transmission de programme et ledit moyen de réception de programme est prévu sur une couche intérieure d'un substrat multicouche.

11. Dispositif de traitement d'informations selon la revendication 2, dans lequel ladite unité de commande est un boîtier à billes.

12. Dispositif de traitement d'informations selon la revendication 7, lorsqu'elle dépend de la revendication 3, comprenant en outre :
un second moyen de commande destiné à lire lesdites données de programme cryptées mémorisées dans ledit moyen de mémorisation de données de programme cryptées,
ledit moyen de réception de données de programme cryptées recevant lesdites données de programme cryptées lues par ledit second moyen de commande.

13. Dispositif de circuit comprenant, sous forme intégrée, un dispositif de traitement d'informations selon la revendication 3 ou 12, ou l'une quelconque des revendications 4, 5, 7, 8 ou 9 lorsqu'elles dépendent de la revendication 3.

14. Procédé de chargement de programme pour charger un programme destiné à commander une opération préétablie d'un dispositif de traitement d'informations, dans ledit dispositif de traitement d'informations, ledit procédé comprenant les étapes comprenant :
une étape de réception de données de programme cryptées consistant à recevoir des données de programme cryptées comportant un micro-programme crypté, des premières données de vérification cryptées, et un programme de vérification crypté, crypté avec une clé de cryptage préétablie,
une étape de décryptage consistant à décrypter lesdites données de programme en un micro-programme, en premières données de vérification et en un programme de vérification respectivement, en utilisant une clé de décryptage préétablie,
une étape de mémorisation consistant à mémoriser ledit programme dans un moyen de mémorisation,
une étape consistant à calculer des secondes données de vérification par le biais dudit programme de vérification à partir dudit micro-programme,
une étape consistant à comparer lesdites secondes données de vérification calculées auxdites premières données de vérification, et
une étape consistant à lire ledit programme en réponse à la coïncidence des premières données de vérification et des secondes données de vérification lorsqu'elles sont comparées les unes aux autres.

15. Procédé de chargement de programme selon la revendication 14, dans lequel ledit dispositif de traitement d'informations comprend une unité de commande comprenant ledit moyen de mémorisation, qui comporte mémorisé dans celui-ci un second programme et un moyen de commande destiné à lire ledit second programme mémorisé dans ledit moyen de mémorisation et destiné à commander une seconde opération préétablie dudit dispositif de traitement d'informations sur la base dudit second programme tel qu'il est lu,
où ladite étape de réception de données de programme cryptées répond à une demande de mise à jour de programme demandant la mise à jour dudit programme,
ledit procédé comprenant :
une étape de transmission de programme consistant à transmettre ledit programme, décrypté à partir desdites données de programme cryptées par le biais de ladite étape de décryptage,
une étape de réception de programme consistant à recevoir ledit programme transmis à ladite unité de commande par le biais de ladite étape de transmission de programme, et
une étape d'écriture de programme consistant à écrire ledit programme, reçu par le biais de ladite étape de réception de programme, dans ledit moyen de mémorisation.

16. Procédé de chargement de programme selon la revendication 14, comprenant en outre :
une étape limitant l'extraction consistant à limiter l'extraction à partir d'un dispositif externe dudit programme décrypté.

17. Procédé de chargement de programme selon la revendication 14, 15 ou 16 dans lequel ladite étape de réception de données de programme cryptées reçoit lesdites données de programme cryptées transmises depuis un dispositif externe.

18. Procédé de chargement de programme selon la revendication 14, 15 ou 16, comprenant en outre :
une étape de reproduction consistant à reproduire un support d'enregistrement, comportant enregistrées sur celui-ci des données de programme cryptées qui constituent ledit programme crypté en utilisant une clé de cryptage préétablie,
ladite étape de réception de données de programme cryptées recevant lesdites données de programme cryptées reproduites dans ladite étape de reproduction.

19. Procédé de chargement de programme selon la revendication 18, lorsqu'elle dépend de la revendication 15, dans lequel ladite étape de reproduction reproduisant ledit support d'enregistrement réagit à la réception de la réception de ladite demande de mise à jour de programme.

20. Procédé de chargement de programme selon la revendication 14, comprenant en outre :
une étape de lecture de données de programme cryptées consistant à lire lesdites données de programme cryptées à partir du moyen de mémorisation de données de programme cryptées dans ledit dispositif de traitement d'informations où lesdites données de programme cryptées sont mémorisées,
ladite étape de réception de données de programme cryptées recevant lesdites données de programme cryptées lues dans ladite étape de lecture de données de programme cryptées.

21. Procédé de chargement de programme selon la revendication 14, 15 ou 16, dans lequel ladite étape de réception de données de programme reçoit lesdites données de programme cryptées comprenant des données de vérification cryptées, obtenues lors du cryptage, en utilisant ladite clé de cryptage préétablie, des premières données de vérification, calculées par le biais de calculs préétablis à partir de données de programme dudit programme, et un programme de vérification qui est un programme destiné à exécuter lesdits calculs préétablis, et un programme de vérification de cryptage.

22. Procédé de chargement de programme selon la revendication 21, dans lequel ladite étape de décryptage décrypte, lors du décryptage desdites données de programme cryptées, lesdites données de vérification cryptées et le programme de vérification crypté en lesdites premières données de vérification et en ledit programme de vérification, en utilisant ladite présente clé de cryptage préétablie,
ladite étape de mémorisation mémorise lesdites premières données de vérification et le programme de vérification, décryptés par ladite étape de décryptage, dans ledit moyen de mémorisation,
ladite étape de commande comprenant une étape de calcul de données de vérification consistant à calculer des secondes données de vérification, à partir des données de programme dudit programme, mémorisées dans ledit moyen de mémorisation, sur la base dudit programme de vérification, avant d'exécuter ledit programme, et une étape de comparaison de données de vérification consistant à comparer les secondes données de vérification calculées aux premières données de vérification mémorisées dans ledit moyen de mémorisation,
ladite étape de lecture lisant ledit programme mémorisé dans ledit moyen de mémorisation en réponse à une coïncidence des premières données de vérification et des secondes données de vérification comparées les unes aux autres par le biais de ladite étape de comparaison de données de vérification.

23. Support d'enregistrement comportant enregistré sur celui-ci un programme de chargement destiné à charger un programme, configuré pour commander une opération préétablie d'un dispositif de traitement d'informations, dans ledit dispositif de traitement d'informations, ledit programme de chargement comprenant un code de programme destiné à exécuter un procédé conforme à l'une quelconque des revendications 14 à 22.
